Europäisches Patentamt

European Patent Office

Office européen des brevets

(19)

(11) **EP 1 391 834 A2**

(12) **EUROPEAN PATENT APPLICATION**

(43) Date of publication:
**25.02.2004 Bulletin 2004/09**

(51) Int Cl.⁷: $G06F\ 17/30$

(21) Application number: **03018569.8**

(22) Date of filing: **18.08.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **19.08.2002 JP 2002238031
30.06.2003 JP 2003189111**

(71) Applicant: **MATSUSHITA ELECTRIC INDUSTRIAL
CO., LTD.**
**Kadoma-shi, Osaka 571-8501 (JP)**

(72) Inventors:
• **Nomoto, Masako**
**Tokorozawa-shi, Saitama 359-1125 (JP)**
• **Sato, Mitsuhiro**
**Atsugi-shi, Kanagawa 243-0216 (JP)**
• **Suzuki, Hiroyuki**
**Kawasaki-shi, Kanagawa 211-0041 (JP)**

(74) Representative: **Grünecker, Kinkeldey,
Stockmair & Schwanhäusser Anwaltssozietät
Maximilianstrasse 58
80538 München (DE)**

(54) **Document retrieval system and question answering system**

(57)     A document retrieval system capable of obtaining information requested by the user with a high degree of accuracy. In this system, the query input section 102 receives query input by the user. The keyword extraction section 104 analyzes the input query and extracts keywords. The keyword type assignment section 106 decides the type of each extracted keyword and assigns a keyword type. The question type decision section 108 decides the question type. The keyword classification section 110 classifies the keywords to which the keyword types are assigned into a major type and minor type with reference to the keyword classification rules stored in the keyword classification rule storage section 112. The document retrieval section 114 searches a document collection stored in the document storage section 116 using the classified keyword groups and obtains the document of the retrieved result.

100  DOCUMENT RETRIEVAL SYSTEM

FIG.1

EP 1 391 834 A2

**Description**

BACKGROUND OF THE INVENTION

Field of the Invention

The present invention relates to a document retrieval system and question answering system.

Description of the Related Art

With the widespread use of the Internet and personal computers, etc., in recent years, voluminous computerized documents are circulated and document retrieval systems which search for desired documents from computerized and accumulated document information are routinely used. Such a document retrieval system compares the similarity of keywords specified by the user and each of the target documents, and presents the documents containing the keywords in descending order of similarity as a retrieved result.

However, what is obtained as a result of the search in such a document retrieval system is documents, and therefore in response to a question, for example, "Which country is the champion of the Soccer World Cup in 2002?" the user needs to read each of the document obtained as a result of the search to get "Brazil" which is the information the user originally wanted to know. Thus, there is a growing interest in a question answering system that presents answers to the question instead of documents . The question answering system extracts answers from documents and presents them.

A typical example of such a question answering system is the question answering system described in the Unexamined Japanese Patent Publication No.2002-132811.

In this question answering system, a question analysis apparatus extracts a set of terms and type of the question from the query, a document retrieval apparatus searches for the target documents using the set of terms and type of the question and an answer extraction apparatus extracts an answer to the query from the retrieved documents.

However, the conventional document retrieval system and question answering system do not search for documents or extract answers in consideration of the type of the question or the expected detailedness of the information contained in the answer, having a defect that it is not possible to obtain sufficient accuracy in document retrieval and answer extraction.

SUMMARY OF THE INVENTION

It is an object of the present invention to provide a document retrieval system and question answering system searching information requested by the user with high accuracy.

A subject matter of the present invention is to analyze a question entered by the user, identify the types of the document and answer requested by the user and its level of detailedness and perform processing using this information. More specifically, the document retrieval system of the present invention classifies keywords extracted from input question into a major type and minor type and search documents using these keywords. The question answering system of the present invention is provided with means for deciding the expected detailedness of the information in the answer required from the input query.

According to an aspect of the invention, a document retrieval system, that compares similarlity between a query and individual documents and outputs a list of documents ranked based on the similarity, comprises an extraction section that extracts keywords from the question, a classification section that classifies the keywords extracted by the extraction section into a major type related to a central subject indicated by the query and a minor type related to supplementary information, based on attributes of the keywords, and a retrieval section that carries out document search processing to obtain a list of documents ranked in order of similarity based on the classification result of the classification section.

According to another aspect of the invention, a question answering system comprises a question input section that inputs query, a question analysis section that analyzes the input query, a document retrieval section that searches for documents based on the analysis of the query, an answer generation section that generates an answer to the query based on the retrieved documents, and an answer output section that outputs the answer generated. The question analysis section comprises a keyword extraction section that extracts keywords from the input query, a keyword type assignment section that assigns semantic attributes having hierarchic levels of detailedness to the extracted keywords as the keyword types, and a question type decision section that decides the type of the query based on the semantic attributes with a level of detailedness assigned to the extracted keywords. The answer generation section comprises a semantic attribute assignment section that assigns semantic attributes with a level of detailedness to the keywords in the retrieved documents, an answer candidate selection section that selects answer candidates from expressions of the retrieved documents, keywords of which are assigned semantic attributes with a level of detailedness, based on the decision result of the question type decision section and the level of detailedness of the decision result, and an answer ranking section that ranks the selected answer candidates. The answer output section outputs the answers based on the ranking result of the answer ranking section.

BRIEF DESCRIPTION OF THE DRAWINGS

The above and other objects and features of the invention will appear more fully hereinafter from a consideration of the following description taken in connection with the accompanying drawing wherein one example is illustrated by way of example, in which;

FIG. 1 is a block diagram showing a configuration of a document retrieval system according to Embodiment 1 of the present invention;
FIG.2 illustrates an overview of an example of a series of processes from keyword extraction to keyword classification in the document retrieval system corresponding to Embodiment 1;
FIG.3 illustrates an example of level of detailedness information;
FIG.4 illustrates an example of keyword classification rules used in Embodiment 1;
FIG. 5 is a flow chart showing an example of a document search processing procedure using major/minor keywords in the document retrieval system corresponding to Embodiment 1;
FIG.6 is a flow chart showing another example of a document search processing procedure using major/minor keywords in the document retrieval system corresponding to Embodiment 1;
FIG.7 schematically illustrates the result of the document search processing executed according to the flow chart in FIG.6;
FIG.8 is a flow chart showing a further example of the document search processing procedure using major/minor keywords in the document retrieval system corresponding to Embodiment 1;
FIG.9 schematically illustrates a result of the document search processing executed according to the flow chart in FIG. 8;
FIG.10 illustrates an overview of an example of a series of processes from keyword extraction to keyword classification in a document retrieval system according to Embodiment 2 of the present invention;
FIG. 11 illustrates an example of keyword classification rules used in Embodiment 2;
FIG. 12 is a flow chart showing an example of a document search processing procedure using keywords classified into major/minor keywords and search condition for bibliographic information in the document retrieval system corresponding to Embodiment 2;
FIG. 13 is a block diagram showing a configuration of a document retrieval system according to Embodiment 3 of the present invention;
FIG. 14A illustrates an example of a document;
FIG.14B illustrates an example of a document with semantic attributes added;
FIG.14C illustrates an example of a normalized document with semantic attributes added;
FIG. 15 is a flow chart showing an example of a document search processing procedure using major/minor keywords on a document with semantic attributes in the document retrieval system corresponding to Embodiment 3;
FIG.16 is block diagram showing a configuration of a question answering system according to Embodiment 4 of the present invention;
FIG.17 is a flow chart showing an operation of a question answering system corresponding to Embodiment 4;
FIG.18 is block diagram showing a configuration of a question answering system according to Embodiment 5 of the present invention;
FIG. 19 illustrates an overview of an answer detailedness level estimation method in the question answering system corresponding to Embodiment 5;
FIG.20 illustrates an overview of an answer detailedness level decision method in the question answering system corresponding to Embodiment 5; and
FIG.21 is a block diagram showing a configuration of a question answering system according to Embodiment 6 of the present invention.

DETAILED DESCRIPTION OF THE PREFERRED EMBODIMENTS

With reference now to the attached drawings, embodiments of the present invention will be explained in detail below.

(Embodiment 1)

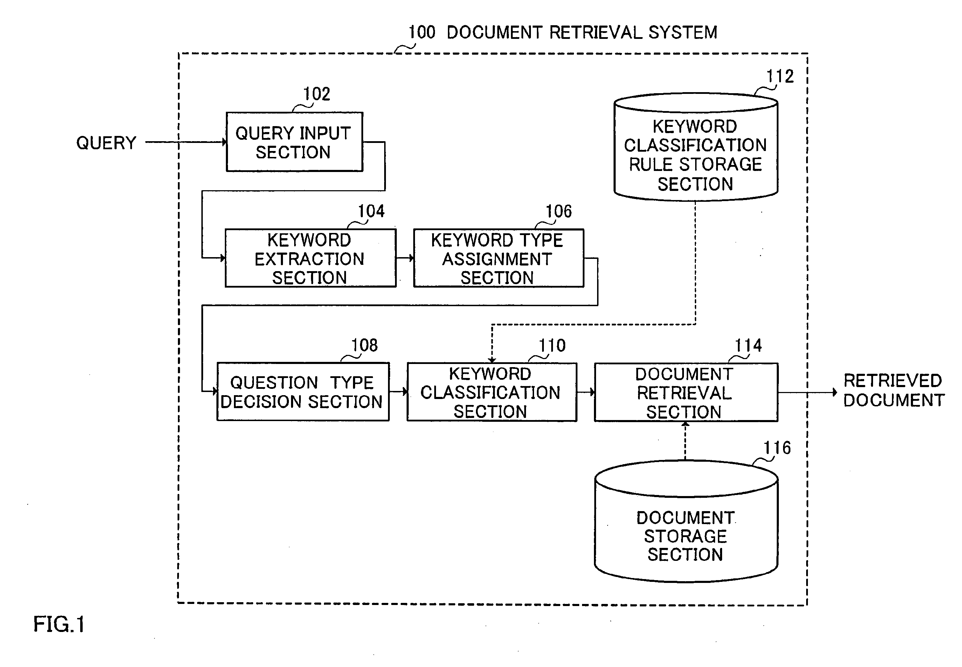

FIG. 1 is a block diagram showing a configuration of a document retrieval system according to Embodiment 1 of the present invention.

This document retrieval system 100 is a system for comparing similarity between query and individual document and outputting a list of documents ranked in order of the similarity and includes a query input section 102, a keyword extraction section 104, a keyword type assignment section 106, a question type decision section 108, a keyword classification section 110, a keyword classification rule storage section 112, a document retrieval section 114 and a document storage section 116.

The hardware configuration of the document retrieval system 100 is arbitrary and not limited to a particular configuration. For example, the document retrieval system 100 is implemented by a computer provided with a CPU and storage device (ROM, RAM, hard disk and other various storage media) . In that case, the keyword classification rule storage section 112 can be a storage device in the computer or a storage device outside the computer (e.g., one on a network). When the document retrieval system 100 is implemented by a computer in this way, the document retrieval system 100 performs a predetermined operation by the CPU executing a program describing the operation of this document retrieval system 100.

In this document retrieval system 100, the query input section 102 receives query entered by the user first. Then, the keyword extraction section 104 analyzes the query entered and extracts keywords. Then, the keyword type assignment section 106 makes a type decision on each of keywords extracted by the keyword extraction section 104 and assigns a keyword type to each keyword. Then, the question type decision section 108 decides the question type.

Then, with reference to keyword classification rules stored beforehand in the keyword classification rule storage section 112, the keyword classification section 110 classifies keywords with keyword types assigned by the keyword type assignment section 106 into major type keywords (major keywords) and minor type keywords (minor keywords). Finally, the document retrieval section 114 searches for a document collection stored beforehand in the document storage section 116 using the keyword groups classified by the keyword classification section 110 and thereby obtains a document corresponding to the retrieved result.

Here, the major type keyword refers to a keyword related to a central subject indicated by the query and the minor type keyword refers to a keyword related to supplementary information.

Then, the document retrieval system 100 in the above-described configuration will be explained in detail using a specific example.

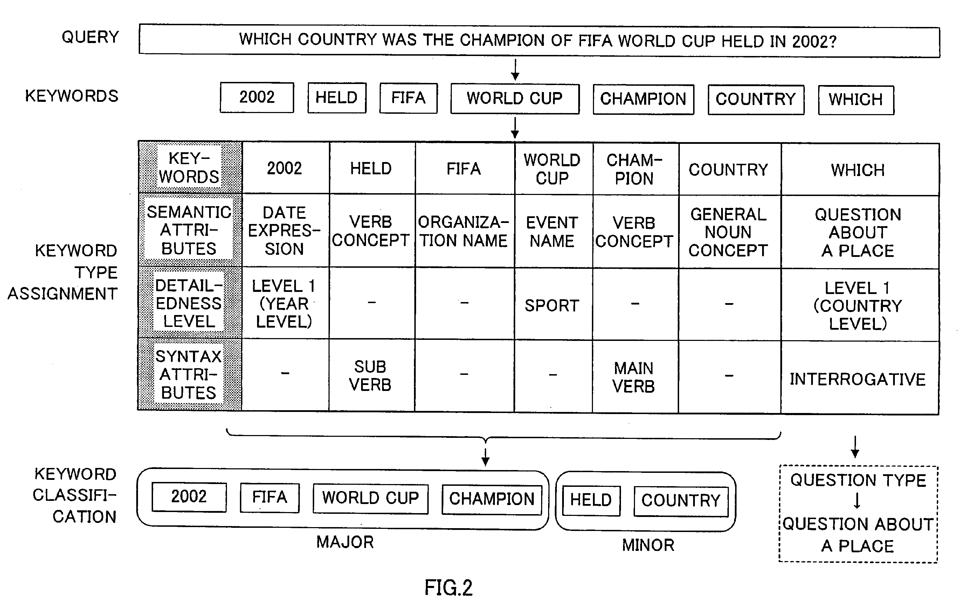

FIG.2 illustrates an overview of a series of processes after keywords are extracted from the query entered, a type is assigned to each keyword until the keyword is classified into a major keyword or minor keyword based on the type assigned.

First, in response to the entered query "Which country is the champion of the FIFA World Cup held in 2002?" the keyword extraction section 104 extracts keywords. The method of extracting keywords is not particularly limited, but it is possible to use, for example, a method of extracting words other than ancillary words as keywords from the start of the query using a dictionary according to a maximum length matching method or a method of extracting only independent words as keywords using a mode element analysis. In the example of Fig.2, the keyword extraction section 104 obtains a group of keywords "2002", "held", "FIFA", "World Cup", "Champion", "Country" and "Which".

Then, the keyword type assignment section 106 assigns a keyword type to each keyword. The method of assigning keyword types is not particularly limited, but, for example, a method using a dictionary that describes a type for each keyword or a method using a proper noun extraction technology shown in the document "Comparison between Japanese and English in Extraction of Proper Nouns" (Fukumoto et al., Information Processing Society of Japan, Workshop Report 98-NL-126, pp.107-114, 1998). In the example of FIG.2, the keyword type assignment section 106 assigns "date expression" to the keyword "2002", "organization name" to the keyword "FIFA" respectively as the semantic attributes of the respective keywords (abbreviated as "semantic attribute" in the figure).

Here, the semantic attribute is expressed using, for example, meaning classification that classifies a factual expression (including at least pronoun expression, numerical expression, verb concept equivalent expression) and interrogative expression according to the meaning of each expression.

When a semantic attribute is assigned to a keyword, it is also possible to assign a hierarchic level of detailedness included in its semantic attribute (meaning classification) as well as shown in the example of FIG.2. For example, the keyword "2002" is a type of "date expression" and its level of detailedness is "year level". In the case of date expression, its level of detailedness also includes "month level", "day level", "hour level", etc. Likewise, in the case of "place name expression", it is also possible to set "country level", "prefectural and city governments level", "municipality level" and "address level" as its level of detailedness.

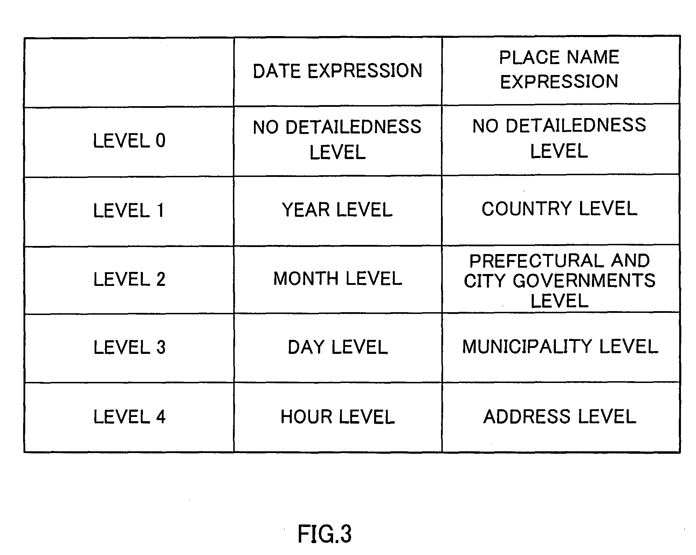

Here, FIG.3 shows an example of level of detailedness information. As shown in FIG. 3, the level of detailedness information has a hierarchical structure. That is, a hierarchical structure is set in such a way that the range confined becomes smaller as the level of detailedness (numerical value) increases, for example, in order of "year level", "month level", "day level", "hour level" in the case of date expression and in order of "country level", "prefectural and city governments level", "municipality level" and "address level" in the case of place name expression.

Furthermore, when a type is assigned to a keyword, it is also possible to assign a syntactic attribute of the keyword (abbreviated as "syntax attribute" in the figure) together as shown in the example of FIG.2. As the syntactic attribute, for example, it is possible to use a standard as to whether an attribute is a core element or not. For example, the keywords "held" and "champion" are each assigned the "verb concept" type and further based on the syntactic attributes in the query in FIG.2, it is decided that "champion" is a main verb in the query and "held" is a subordinate verb in the query and "main" and "sub" are assigned to the respective verb concepts as syntactic attributes.

Here, as the method for deciding a syntactic attribute, that is, as the method for deciding core elements, for example, the following pattern match rule can be used. This pattern match rule is a system in which a core element is estimated by finding a modification relation according to a character string pattern.

(1) ○○ of ΔΔ is + \<interrogative\>→ ○○ is a main verb concept
(2) OO of ΔΔ + \<general noun\> is + \<interrogative\> → OO is a main verb concept

In the caseof the query in FIG. 2, "champion" matches the pattern (2), and therefore it is assigned a type as the main verb concept, while "held" matches neither pattern (1) nor pattern (2), and therefore it can be assigned a type as the subordinate verb concept.

When a syntactic attribute is assigned, not only the method of using the above-described pattern matching rules but also a method of using a verb concept that appears later in the query as a main verb or a method of analyzing the syntax of the query and selecting a core verb, etc., can be used.

This embodiment has explained the case where keywords are extracted from the query first and then each keyword is assigned a type, as an example, but the present invention is not limited to this. For example, it is also possible to adopt a method of embedding semantic attributes and syntactic attributes in the query prior to the extraction of keywords and then extract keywords. In this case, when, for example, the above-described proper noun extraction technology is used, for the query entered (see FIG.2) it is possible to obtain an analysis result such as "\<QUESTION_LOCATION DETAILEDNESS=COUNTRY\> Which \</QUESTION\> \<NOUN\> country \</NOUN\> is the \<VERB TYPE=MAIN\> champion \</VERB\>\<NOUN\> of the \<ORGANIZATION\> FIFA \</ORGANIZATION\>\<EVENT\> World Cup \</EVENT\>\<VERB TYPE=SUB\> held \</VERB\> in \<DATE DETAILEDNESS=YEAR\> 2002 \</DATE\>?" and thereby extract keywords and assign types using this analysis result.

Then, the question type decision section 108 decides the type of the question. Here, the decision on the type of a question refers to estimating what kind of answer the query entered is expected to receive. For example, in the query shown in FIG.2, there is an interrogative expression of "Which?" and through the processing of the keyword type assignment section 106 it is possible to know that the interrogative expression "Which country" is the question about a place. Thus, using this it is possible to decide that this question as a whole is a question about a place.

As shown in the example of FIG. 2, this question type decision processing may also be set so as to also decide the level of detailedness required simultaneously with the question type. For example, in the query shown in FIG.2, with respect to the interrogative expression of "Which country" the level of detailedness is decided to be "level 1 (country level)", and therefore the query as a whole is decided to be a "question about a place requiring the level of detailedness of the country level . "

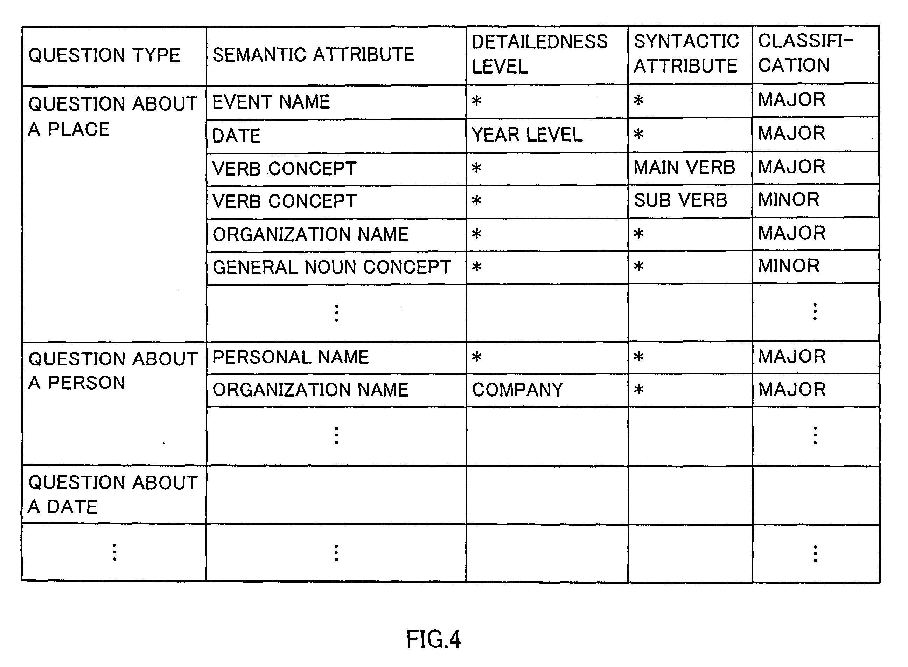

In this way, once a type is assigned to each keyword and the question type is decided, then the keyword classification section 110 classifies the keywords into a major type and minor type using the keyword classification rules stored in the keyword classification rule storage section 112. FIG.4 illustrates an example of the keyword classification rules.

The keyword classification section 110 in this embodiment decides whether each keyword is classified as a major type or minor type with reference to the keyword classification rules and the type assigned to each keyword. More specifically, the keyword classification section 110 refers to the keyword classification rules (see FIG. 4) according to the question type of the decision result of the question type decision section 108 and specifies the current rule group applied to the case of the current question type (e.g., question about a place in the example of FIG. 2). Then, the question type decision section 108 decides whether each keyword is major or minor according to the type assigned to the keyword (semantic attribute and syntactic attribute) and performs classification. For example, in the examples in FIG.2 and FIG.3, the type of the query is decided to be a "question about a place", and therefore with reference to the rules in that case, the keyword "World Cup" of the event name type, the keyword "2002" of the date expression type, the keyword "FIFA" of the organization name type and the keyword "Champion" whose syntactic attribute in a verb concept is a major element are classified as major keywords, while the keyword "Held" whose syntactic attribute in a verb concept is a subordinate element and the keyword "Country" which is a general noun concept are classified as minor keywords .

Here, this embodiment has explained the case where when keywords are classified, the type of query is referenced and different rules are applied depending on the question type, as an example, but this embodiment is not limited to this and can also be adapted so that the same rules are applicable to all query. In this case, the question type decision section 108 in FIG. 1 is omissible.

Furthermore, this embodiment has explained the case where when keywords are classified, semantic attributes and syntactic attributes of keywords are used, as an example, but this embodiment is not limited to this and can also be adapted so as to make it possible to classify the keywords into major and minor keywords by using only the semantic attributes or syntactic attributes of the keywords or including up to the level of detailedness of the semantic attributes of the keywords. This can be realized by describing the keyword classification rules by only the keyword semantic attributes or only syntactic attributes or also describing the level of detailedness of the keyword semantic attributes.

Furthermore, this embodiment has only focused on the semantic attributes and syntactic attributes when classifying keywords, but this embodiment is not limited to this and can also be adapted so as to classify keywords also taking into account statistical attributes of keywords. Here, "restrictiveness" of a keyword can be used as the statistical attribute of the keyword. The restrictiveness of a keyword is given by an IDF (inverse document frequency) often used in the information retrieval field. Suppose the number of documents in which keyword "i" appears is dfi, the total number of document collections is N. For IDF, log (N/dfi) is often used as astandard. Forsimplicityofexplanation, supposeN/dfi is used and this value is used as a restrictiveness here.

For example, for document collections whose total number amounts to 10000, suppose the keyword "Country" is found in 4000 documents and the keyword "World Cup" is found in 100 documents. At this time, suppose the restrictiveness of the keyword is r(w).

$$r(country)=10000/4000=2.5$$

$$r(World\ Cup)=10000/100=100$$

Therefore, if a threshold is set to, for example, 30 and keywords having higher restrictiveness than the threshold are classified as major keywords, the keyword "World Cup" is classified as a major keyword and the keyword "Country" is classified as a minor keyword.

Here, a method of classifying keywords according to a threshold has been presented as an example, but this embodiment is not limited to this and can also be adapted so as to classify according to a different method using statistical attributes.

In this way, it is possible to classify the extracted keywords into major and minor keywords.

Then, the operation of the document retrieval section 114, that is, execution of a search using keywords classified into major and minor keywords will be explained. Several search methods will be explained one by one below.

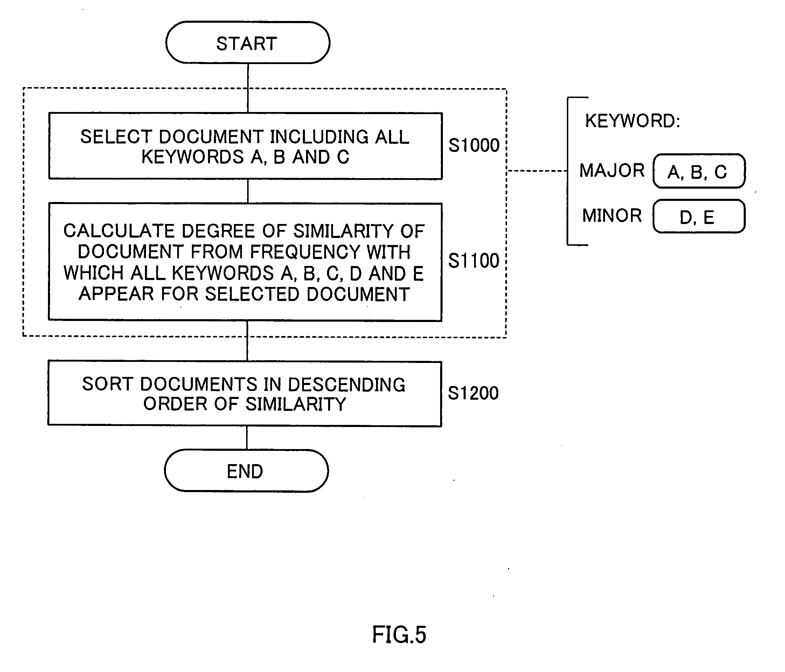

A first search method will be explained using FIG. 5. FIG.5 is a flow chart showing an example of a search processing procedure using major/minor keywords at the document retrieval section 114. Of the keyword groups A, B, C, D and E that the document retrieval section 114 receives, suppose keywords A, B and C are classified as major keywords and keywords D and E are classified as minor keywords.

This first search method carries out document search processing using major keywords as keywords essential to limit the number of retrieved documents and using major keywords and minor keywords as ranking keywords for comparing the similarity between the query and individual documents and sorting the retrieved documents in order of similarity.

More specifically, in step S1000, documents including all major keywords A, B and C are selected from the document collections stored in the document storage section 116 first.

Then, in step S1100, the degree of similarity is calculated based on the frequencies with which keywords (all A, B, C, D and E) appear in each of the documents selected in step S1000. As the method of calculating the degree of similarity, it is possible to use tf*idf weighting which is normally used in a retrieval technique based on, for example, an inexact matching model. The weighting based on tf*idf is described in detail in "Introduction to Modern Information Retrieval" (Saltion, G. and McGill, M.J., McGraw-Hill Publishing Company, 1983).

Then, in step S1200, the retrieved documents are sorted in order of the similarity calculated in step S1100, that is, in descending order of similarity.

Thus, according to the first search method, the search is limited to only documents containing major keywords and a similarity compare is performed taking minor keywords into consideration, too, and in this way it is possible to obtain a list of retrieved document accurately.

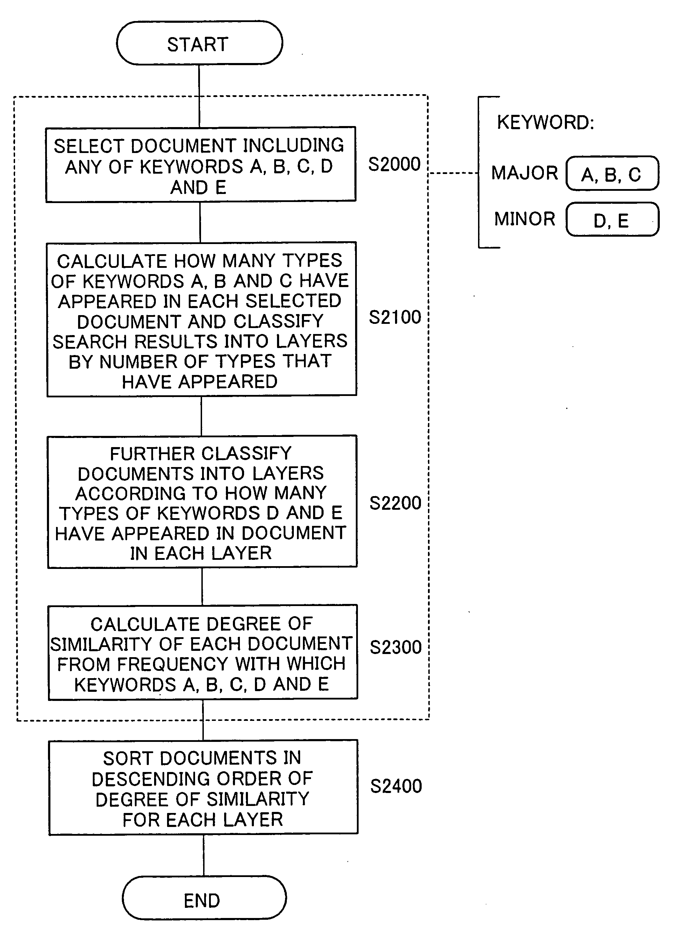

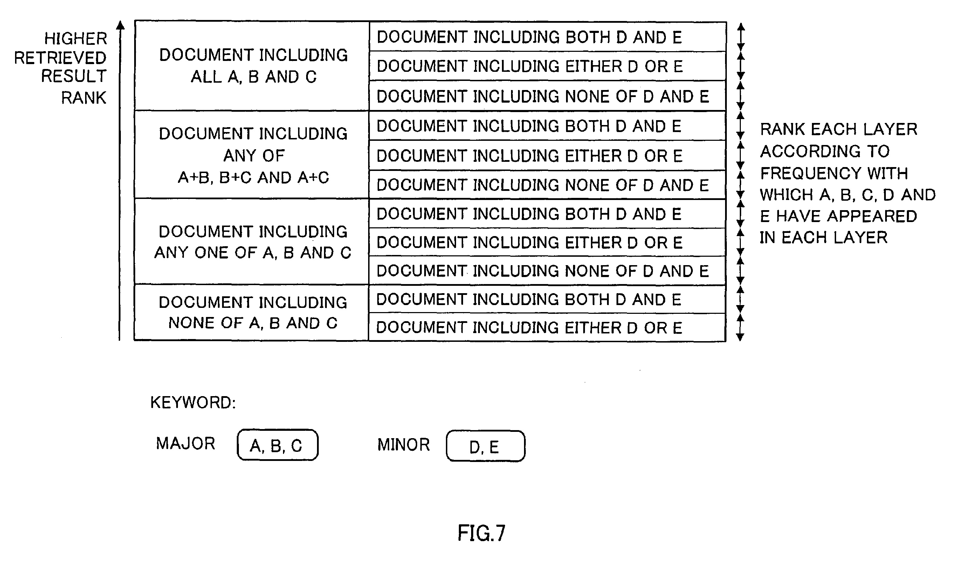

Then, the second search method will be explained using FIG.6 and FIG.7. FIG.6 is a flow chart showing another example of a document search processing procedure using major/minor keywords at the document retrieval section 114 and FIG.7 schematically illustrates the result of the document search processing executed according to the flow chart in FIG. 6. Here, of the keyword groups A, B, C, D and E which the document retrieval section 114 receives, suppose the keywords A, B and C are classified as major keywords and keywords D and E are classified as minor keywords.

When comparing the similarity between the query and individual documents, this second search method classifies the retrieved documents into different layers based on the number of major keywords in each document, further classifies the documents classified in the respective layers into different layers based on the number of minor keywords in each document and compares the similarity of the documents in the respective layers.

More specifically, in step S2000, documents containing any of keywords A, B, C, D and E are searched from documents stored in the document storage section 116 first.

Then, in step S2100, the number of types of the keywords A, B and C that have appeared in each document selected in step S2000 is calculated and the retrieved documents are classified into layers according to the number of types that have appeared. That is, the retrieved documents are classified into layers according to the number of the maj or keyword (A,B,C) in the respective documents. More specifically, as shown in FIG.7, for example, documents that include all A, B and C (the number of keywords = 3) are classified in the top layer, documents including any one of A and B, A and C, and B and C, that is, documents including two of major keywords (the number of keywords = 2) are classified in the second layer, documents including any one of A, B and C (the number of keywords = 1) are classified as the third layer and documents including none of A, B and C (the number of keywords = 0) are classified in the bottom layer.

Then, in step S2200, the documents in the respective layers obtained in step S2100 are further classified into different layers according to the number of minor-type keywords D and E that have appeared. That is, the contents of the respective layers obtained in step S2100 are further classified into layers according to the number of minor-type keywords D and E that have appeared. More specifically, as shown in FIG. 7, for each layer classified by major keywords, documents including both D and E (the number of types that have appeared = 2) are classified as the first layer, documents including either D or E (the number of types that have appeared =1) are classified as the second layer and documents including none of D and E (the number of types that have appeared = 0) are classified as the third layer (however excluding the bottom layer using major keywords).

Then, in step S2300, the degree of similarity is calculated on all documents selected in step S2000 based on the frequency with which keywords A, B, C, D and E appear.

Then, in step S2400, a list of retrieved documents are obtained in order of the similarity resulting from the calculations in step S2300 for the respective layers obtained in step S2200, that is, by sorting the documents in the respective layers in descending order of similarity. An example of this retrieved result is as shown in FIG.7.

Thus, according to the second search method, ranking is performed by layer, and therefore it is possible to reduce the possibility of false drop of the documents to be retrieved compared to the method whose search range is only documents including all major keywords. Furthermore, by ranking documents including more major-type keywords in higher places, it is possible to obtain accurate retrieved results.

Here, this embodiment has described the case where documents are classified into layers using major keywords and then classified into layers using minor keywords, but this embodiment is not limited to this and it is also possible to classify documents into layers using only major keywords and omit further classification into layers using minor keywords.

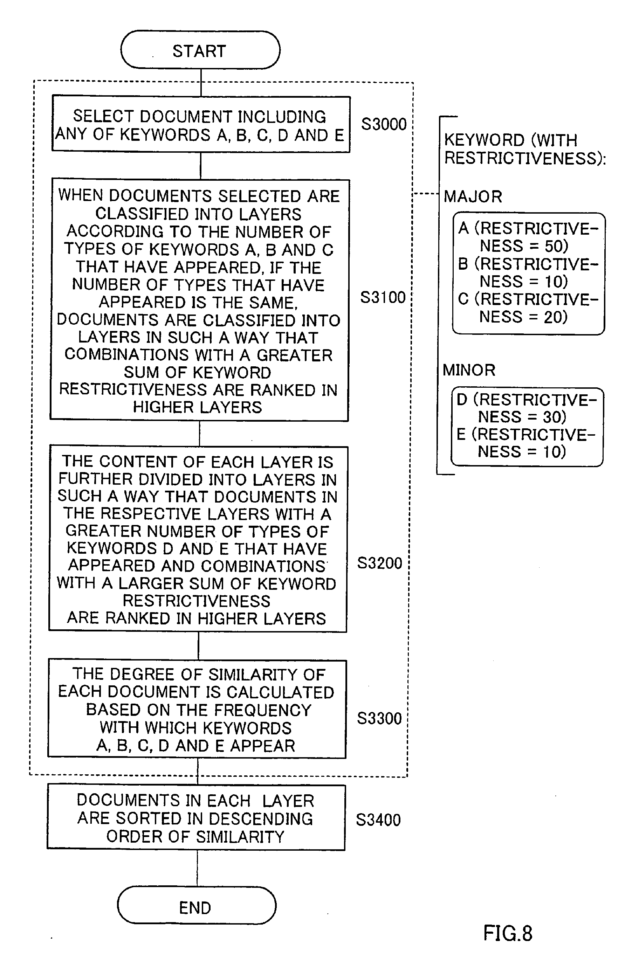

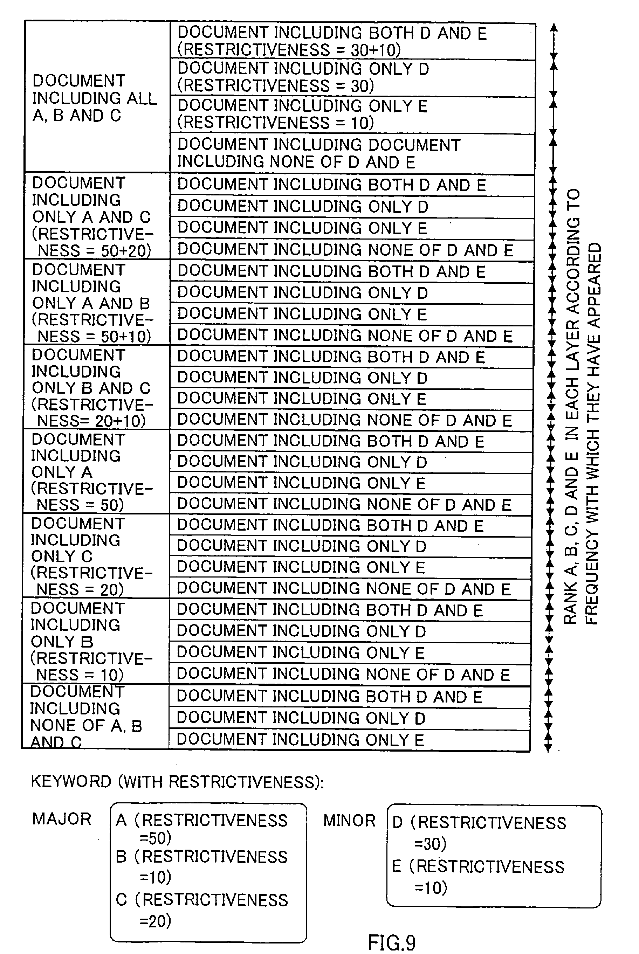

Then, a third search method will be explained using FIG.8 and FIG.9. FIG.8 is a flow chart showing a further example of the document search processing procedure in the document retrieval section 114 using major/minor keywords and FIG.9 schematically illustrates a result of document search processing executed according to the flow chart in FIG.8. Here, of the keyword groups A, B, C, D and E which the document retrieval section 114 receives, suppose the keywords A, B and C are classified as major keywords and the keywords D and E are classified as minor keywords. Furthermore, the keywords A, B, C, D and E are assigned numerical values indicating "restrictiveness" of the keywords. As the restrictiveness for keywords, the above described IDF will be used. Here, suppose the restrictiveness of the keywords A, B, C, D and E are 50, 10, 20, 30 and 10 respectively.

When classifying documents into layers based on the number of types of major/minor keywords that have appeared, this third search method classifies documents into layers based on not only the number of types of keywords that have appeared but also their restrictiveness.

More specifically, in step S3000, documents including any of keywords A, B, C, D and E are selected from the document collections stored in the document storage section 116.

Then, in step S3100, when the documents selected in step S3000 are classified into layers according to the number of major-type keywords A, B and C that have appeared, if the number of types that have appeared is the same, documents are classified into layers in such a way that combinations with a greater sum of keyword restrictiveness are ranked in higher layers. That is, the selected documents are classified into layers using the number of major-type keywords (A, B, C) that have appeared and restrictiveness of the respective major keywords. More specifically, as shown in FIG.9, suppose documents including all A, B and C (the number of types that have appeared = 3) are classified as the top layer. Then, documents including any one of A and B, A and C, and B and C, that is, documents including two types of major keywords (the number of types that have appeared = 2) are classified in descending order of the sum of restrictiveness of keywords in such a way that documents including only A and C (restrictiveness: 50+20=70) are classified as a second layer, documents including only A and B (restrictiveness 50+10=60) are classified as a third layer and documents including only B and C (restrictiveness 20+10=30) are classified as a fourth layer. Then, the documents including any one of A, B and C (the number of types that have appeared = 1) are classified in order of restrictiveness of keywords in such a way that documents including only A are classified as a fifth layer, documents including only C are classified as a sixth layer and documents including only B are classified as a seventh layer. Finally, documents including none of A, B or C (the number of types that have appeared = 0) are classified as the bottom layer.

Then, in step S3200, each layer is further divided into layers in such a way that documents in each layer obtained in step S3100 having a greater number of minor-type keywords (D, E) that have appeared and at the same time having combinations with a larger sum of keyword restrictiveness are classified in higher layers. That is, the content of each layer obtained in step S3100 is further divided into layers according to the number of minor-type keywords (D, E) that have appeared and their restrictiveness. More specifically, for example, as shown in FIG.9, for each layer classified using major keywords, documents including both D and E (the number of types that have appeared = 2) are classified as a first layer, and documents including either D or E (the number of types that have appeared = 1) are classified in order of restrictiveness of keywords in such a way that documents including only D are classified as a second layer, documents including only E are classified as a third layer, documents including none of D and E (the number of types that have appeared = 0) are classified as a fourth layer (however excluding the bottom layer using major keywords).

Then, in step S3300, the degree of similarity is calculated for all documents selected in step S3000 based on the frequency with which keywords A, B, C, D and E appear.

Then, in step S3400, documents in the respective layers obtained in step S3200 are sorted in order of similarity obtained as a result of calculations in step S3300, that is, a list of retrieved documents is obtained by sorting documents in the respective layers in descending order of similarity. An example of this retrieved result is shown in FIG.9.

Thus, the third search method carries out ranking by layer taking into account restrictiveness of keywords, too, and can thereby reduce false drop of documents to be retrieved compared to the method whose search range is only documents including all major keywords. Furthermore, by ranking documents including more major-type keywords in higher places and further classifying the documents having the same number of based on the presence of keywords with higher restrictiveness, the third search method can obtain a with a higher degree of accuracy.

Thus, this embodiment classifies keywords extracted from query into a major type and a minor type based on their attributes and carries out document search processing based on this classification result, and can thereby flexibly change keyword processing according to the keyword type after the classification, perform a document search considering the type of the query and obtain information requested by the user (desired documents) with a high degree of accuracy.

This embodiment carries out a search in units of documents, but this embodiment is not limited to this and can also be adapted so as to configure search target in units smaller than documents such as paragraphs.

(Embodiment 2)

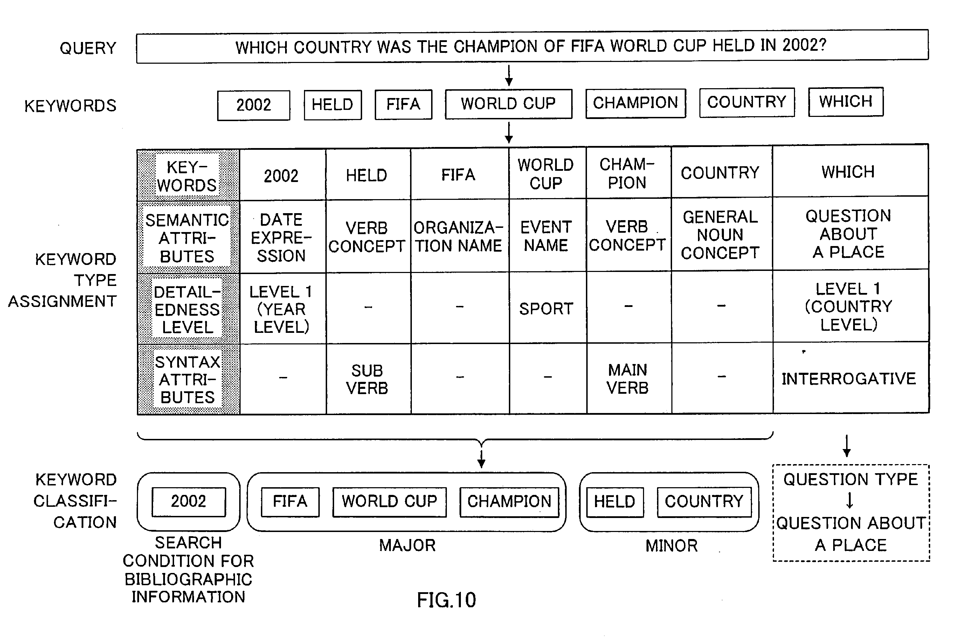

FIG.10 illustrates an example of processes up to keyword classification in a document retrieval system according to Embodiment 2 of the present invention. The document retrieval system in this embodiment has the same basic configuration as that of the document retrieval system 100 corresponding to Embodiment 1 shown in FIG. 1, and therefore illustrations and explanations thereof will be omitted.

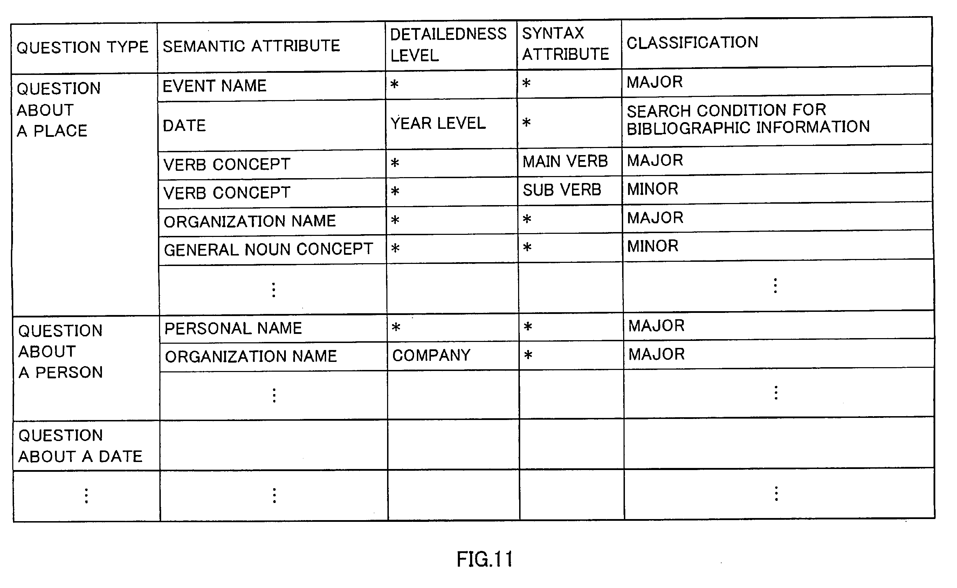

A feature of this embodiment is that keywords are classified not only into major/minor keywords but also according to "search condition for bibliographic information." FIG. 11 illustrates an example of keyword classification rules used in this embodiment. Using the keyword classification rules shown in FIG. 11, in the case of a question about a place, for example, a date expression can be classified as the search condition for bibliographic information. The contents of keyword extraction and assignment of keyword types are the same as those in Embodiment 1, and therefore their explanations are omitted.

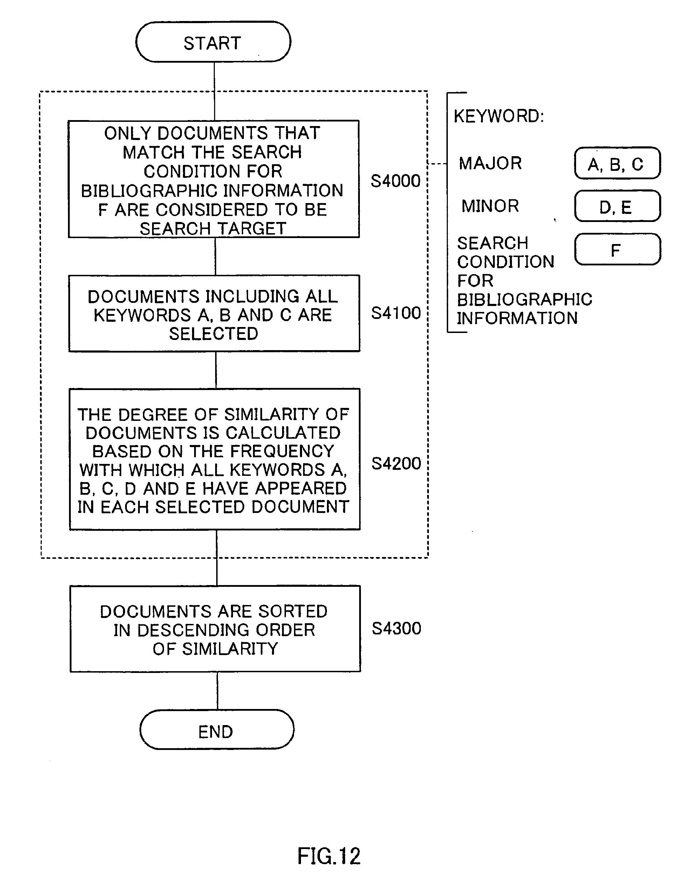

Next, the execution of a search using keywords classified as major/minor keywords and search condition for bibliographic information will be explained using the flow chart in FIG.12. Here, suppose the keywords A, B and C of the keyword groups A, B, C, D, E and F which the document retrieval section receives are classified as major keywords and the keywords D and E are classified as minor keywords and the keyword F is classified as the search condition for bibliographic information.

First, in step S4000, document collections are narrowed down using the search condition for bibliographic information F. That is, only documents that match the search condition for bibliographic information are considered to be search target. For example, if the search condition for bibliographic information is "year 2002", only documents created in 2002 are set as the search target.

Then, in step S4100, documents including all major keywords A, B and C are selected from documents within the search range set in step S4000.

Then, in step S4200, the degree of similarity is calculated based on the frequency with which keywords (all of A, B, C, D and E) appear in the documents selected in step S4100. As the method of calculating the degree of similarity, it is possible to use, for example, weighting with tf*idf as described above.

Then, in step S4300, the retrieved documents are sorted in order of similarity obtained as a result of the calculation in step S4200, that is, in descending order of similarity.

Thus, this embodiment classifies keywords not only as major/minor keywords but also as search condition for bibliographic information. That is, this embodiment considers part of query as the search condition for bibliographic information, and can thereby obtain a retrieved result that reflects the user's search intention.

This embodiment has described the case where the search condition for bibliographic information are combined with the first search method in Embodiment 1 shown in FIG.5, but this embodiment is not limited to this and it is also possible to combine the search condition for bibliographic information with, for example, the second search method in Embodiment 1 shown in FIG.6 (ranking by layer) and the third search method in Embodiment 1 shown in FIG.8 (ranking by layer also including keyword restrictiveness).

Furthermore, this embodiment carries out a search in units of documents, but this embodiment is not limited to this and can also be adapted so as to configure search target in units smaller than documents such as paragraphs as in the case of Embodiment 1.

(Embodiment 3)

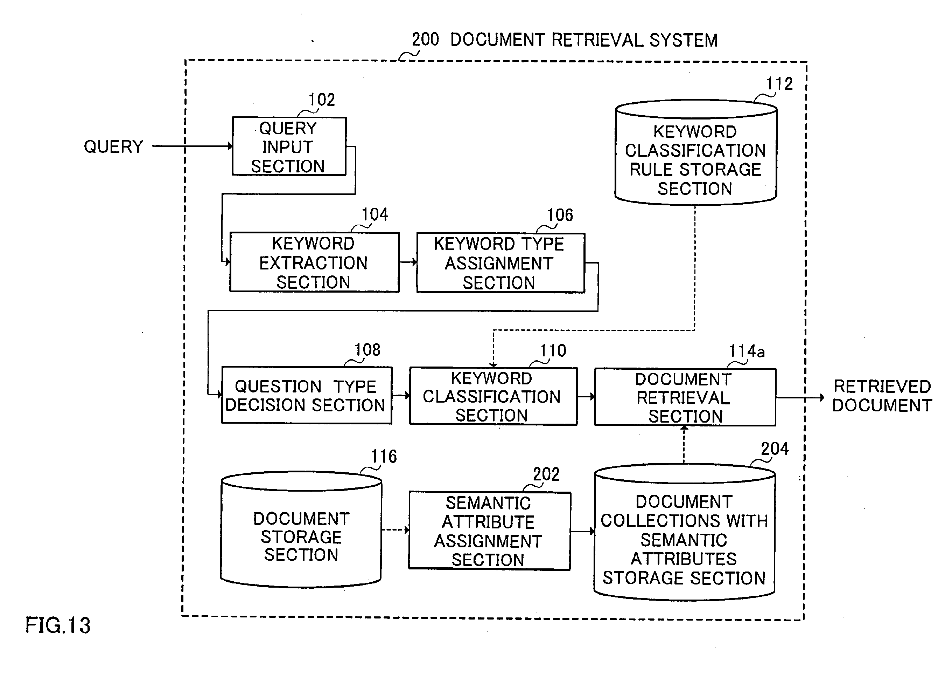

FIG.13 is a block diagram showing a configuration of a document retrieval system according to Embodiment 3 of the present invention. This document retrieval system 200 has the same basic configuration as that of the document retrieval system 100 corresponding to Embodiment 1 shown in FIG. 1, and the same components are assigned the same reference numerals and explanations thereof will be omitted.

A feature of this embodiment is that it further includes a semantic attribute assignment section 202 that assigns semantic attributes to document collections stored in the document storage section 116. The processing results of the semantic attribute assignment section 202, that is, document collections (document collections with semantic attributes) are stored in a document collections with semantic attributes storage section 204. In this case, a document retrieval section 114a searches for document collections with semantic attributes stored in the document collections with semantic attributes storage section 204.

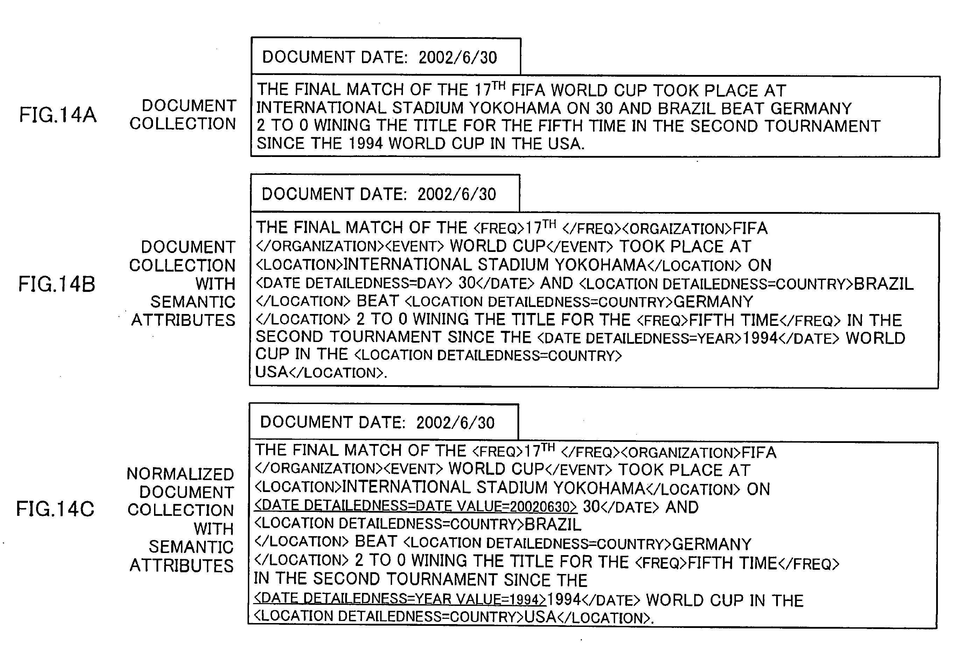

More specifically, the semantic attribute assignment section 202 tags proper nouns in original document collections stored in the document storage section 116 using, for example, the aforementioned proper noun extraction technology. When, for example, the document collection shown in FIG.14A is tagged with semantic attributes using the proper noun extraction technology, a document collection with semantic attributes as shown in FIG.14B is obtained. In this example, <LOCATION DETAILEDNESS=COUNTRY> indicating that a semantic attribute is "place" and its level of detailedness is "country level" is added to words indicating country names "Brazil", "Germany" and "U.S.A." as tags.

Here, when semantic attributes are added, it is also possible to normalize expressions in documents. FIG. 14C shows an example of a normalized document collection with semantic attributes. This document collection with semantic attributes is an example of normalizing the date expression for the document collection with semantic attributes in FIG.14B. Normalization of the date expression can be performed using, for example, the date attached as bibliographic information of documents. For example, in the examples in FIG.14A to FIG.14C, the date of the document is "2002/6/30", it is possible to decide that the expression "30" in the document indicates "June 30, 2002", and therefore <DATE DETAILEDNESS=DAY VALUE=20020630> indicating that the semantic attribute is "date", the level of detailedness is "day level" and their normalized value is June 30, 2002 is added as a tag to this expression. Likewise, by providing a table of correspondence between the era name and year of the Christian era separately, <DATE DETAILEDNESS=DAY VALUE=20020630> can also be added as a tag to the expression "June 30 in the 14 year of the Heisei era."

The above-described example illustrates the case where the date expression is normalized, but it is also possible to normalize other tags indicating semantic attributes. For example, when it is obvious that a description in a document is about "Kanagawa Prefecture" (e.g., local field of a newspaper article), <LOCATION DETAILEDNESS=CITY VALUE=Atsugi-shi, Kanagawa> Atsugi-shi </LOCATION> can be attached as the tag indicating the semantic attribute corresponding to the expression "Atsugi-shi." The similar technique can also be applied to a personal name expression (expression with only a surname is normalized to a full name) and organization name expression (abbreviation is normalized to an official name), etc. Such normalization (supplement) can be realized using an external dictionary describing a relationship between different word notations, thesaurus and rewriting rules, etc.

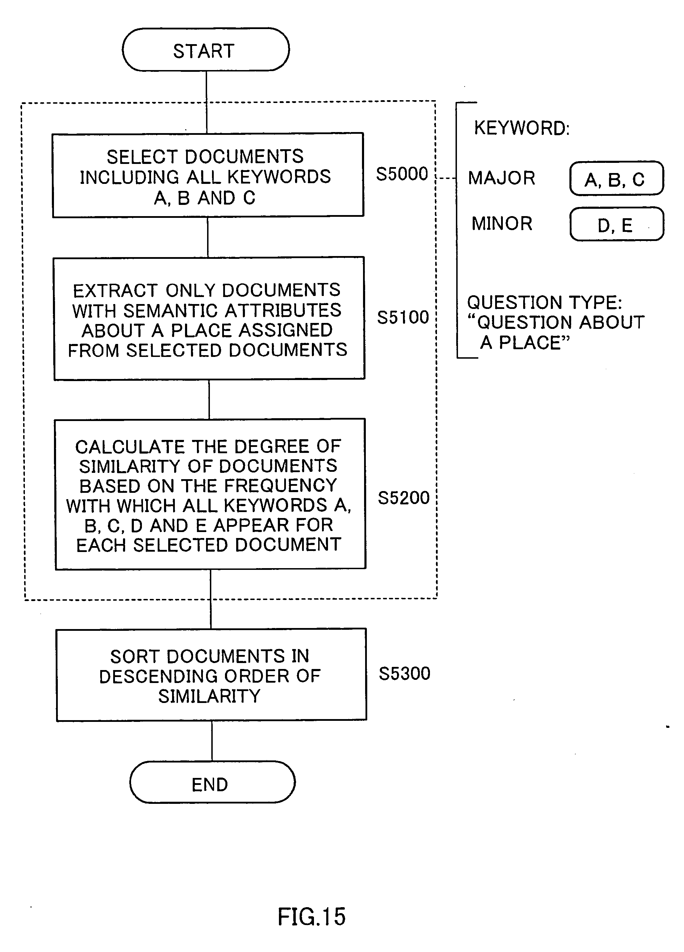

Then, the method of carrying out a search for the document collections with semantic attributes attached as shown above will be explained using the flow chart in FIG.15. Here, suppose the keywords A, B and C of the keyword groups A, B, C, D and E which the document retrieval section 114a receives are classified as major keywords and the keywords D and E are classified as minor keywords, and the question type decision section 108 decides that the search question type is "question about a place."

First, in step S5000, documents that include all major keywords A, B and C are selected from the document collection with semantic attributes stored in the document collections with semantic attributes storage section 204 are selected.

Then, in step S5100, only documents with semantic attributes about a place attached are extracted from the documents selected in step S5000. At this time, when, for example, the tagging shown in FIG.14A to FIG. 14C is performed as the semantic attributes, only documents including a tag <LOCATION> are extracted.

At this time, when the search question type as a result of the decision by the question type decision section 108 further includes up to the level of detailedness "level 1 (country level)", it is necessary to extract only documents including a tag <LOCATION DETAILEDNESS=COUNTRY>. Furthermore, it is also possible to adopt a configuration of extracting documents whose level of detailedness is higher than a specified level using a hierarchical structure of the level of detailedness shown in FIG. 3. For example, when the level of detailedness 1 (country level) is specified, it is also possible to extract documents having semantic attributes of the level of detailedness 2 (prefectural and city governments level) and level of detailedness 3 (municipality level).

Then, in step S5200, the degree of similarity is calculated based on the frequency with which keywords (all A, B, C, D and E) appear in the respective documents selected in step S5100. As the method for calculating the degree of similarity, for example, weighting with tf*idf can be used as described above.

Then, in step S5300, the retrieved documents are sorted in order of similarity obtained as a result of the calculation in step S5200, that is, in descending order of similarity.

Thus, this embodiment assigns semantic attributes to document collections and carries out a search using the search question type and semantic attributes in documents, and can thereby compare the degree of similarity taking into account minor keywords, too, while limiting the search range to only documents including major keywords and having semantic attributes that match the search question type and obtain a retrieved result accurately.

This embodiment has described the case where a search method using the search question type and semantic attributes in documents is combined with the first search method in Embodiment 1 shown in FIG.5 as an example, but this embodiment is not limited to this and it is also possible to combine the search method with the second search method (ranking by layer) in Embodiment 1 shown in FIG.6 or the third search method (ranking by layer including restrictiveness of keywords) in Embodiment 1 shown in FIG.8.

Furthermore, this embodiment carries out a search in units of documents, but this embodiment is not limited to this and can also be adapted so as to configure search target in units smaller than documents such as paragraphs as in the case of Embodiment 1.

Furthermore, this embodiment has described the case where the semantic attribute assignment section 202 assigns semantic attributes to document collections beforehand, as an example, but this embodiment is not limited to this and can also be adapted so as to assign semantic attributes to only document collections obtained after searching for document collections. It generally takes a considerable calculation time to extract proper nouns from a large number of documents, and therefore adopting such a configuration makes it possible to assign semantic attributes to only necessary documents and streamline the processing.

Furthermore, this embodiment can also be adapted so as to search for documents whose semantic attribute values are normalized (document collection with normalized semantic attributes) as document collections. In this case, when, for example, "2000/6/30" is specified as a keyword, even if only expression "30" appears in the article, including the normalized tag value (<DATE DETAILEDNESS=DAY VALUE=20020630> in the example of FIG.14C) in the search target allows this document to be included in the retrieved result and can thereby suppress false drop of the documents to be retrieved to a minimum level.

(Embodiment 4)

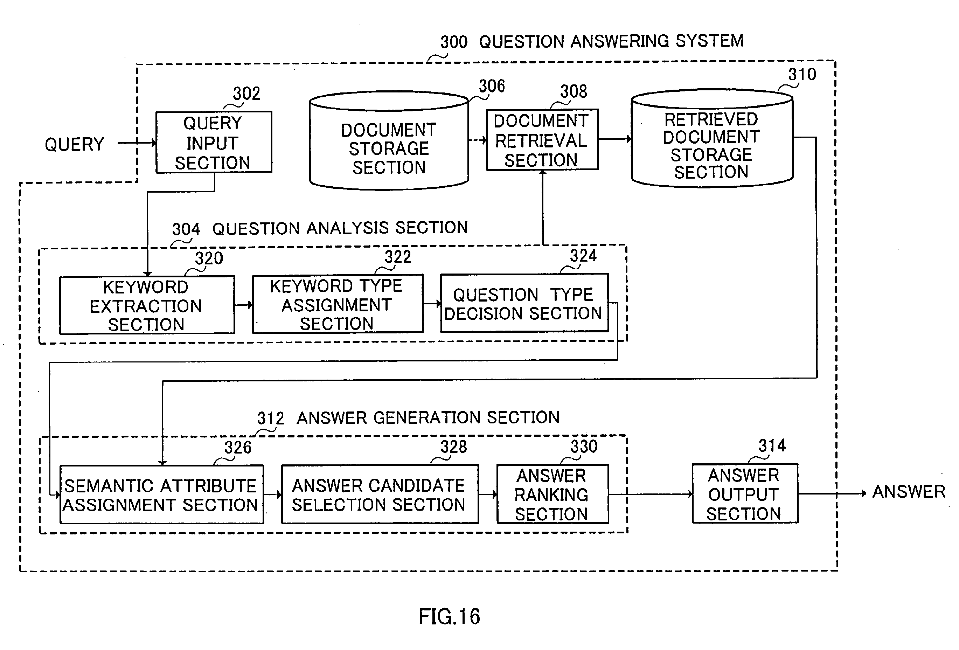

FIG.16 is a block diagram showing a configuration of a question answering system according to Embodiment 4 of the present invention. Here the question answering system refers to, for example, a system that outputs an answer character string itself such as "Brazil" in response to a question "Which country is the champion of the World Cup in 2002?."

The output of the question answering system is not limited to an answer character string alone, but it is also possible to output it in combination with a set of documents from which the answer has been extracted. For example, an evaluation type workshop on a question answering technology: TREC's Question Answering Track (Document: E. M. Voorhees, "Overview of the TREC 2002 Question Answering Track", Proceedings of the Eleventh Text Retrieval Conference (TREC2002), 2003), and NTCIR3's question answering task (Document: J. Fukumoto, T. Kato, F. Masui, "Question Answering Challenge (QAC-1) An Evaluation of Question Answering Task at NTCIR Workshop 3", Proceedings of the Third NTCIR Workshop on Research in Information Retrieval, Automatic Text Summarization and Question Answering, to be published in 2003) require that a set of answer character strings and IDs of documents from which answers are extracted should be output as the output of a participating system.

A question answering system 300 shown in FIG.16 is mainly constructed of a query input section 302 that receives query input from the user, a question analysis section 304 that analyzes the input query, a document retrieval section 308 that searches for a document collection based on the analysis result of the query, an answer generation section 312 that generates an answer to the query based on the retrieved document and an answer output section 314 that outputs an answer. The answer is presented to the user by the answer output section 314. Search target documents are stored in a document storage section 306 beforehand and the retrieved documents are stored in a retrieved document storage section 310. The question analysis section 304 further includes a keyword extraction section 320, a keyword type assignment section 322 and a question type decision section 324. Furthermore, the answer generation section 312 includes a semantic attribute assignment section 326, an answer candidate selection section 328 and an answer ranking section 330.

The hardware configuration of the question answering system 300 is arbitrary and not limited to a particular configuration. For example, the question answering system 300 is implemented by a computer equipped with a CPU and storage apparatus (ROM, RAM, hard disk and other various storage media). When the question answering system 300 is implemented by a computer, the question answering system 300 performs a predetermined operation when the CPU executes a program describing the operation of this question answering system 300.

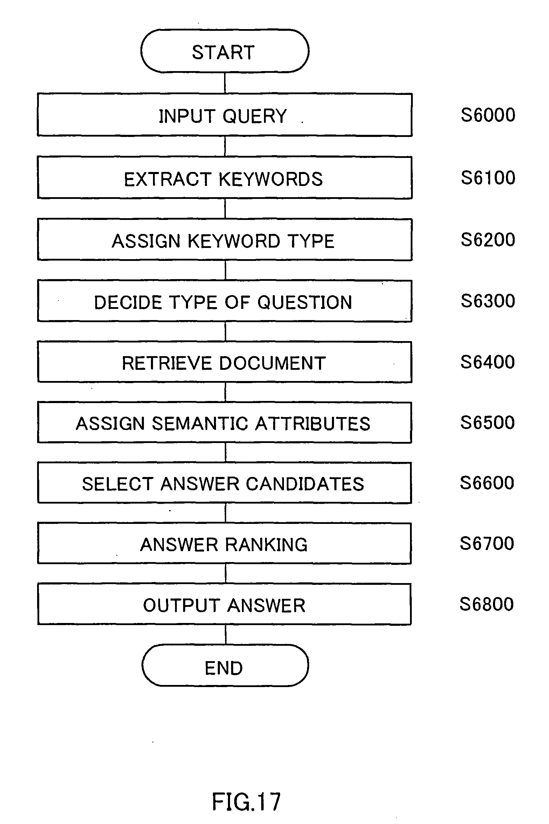

Then, the operation of the question answering system 300 in the above-described configuration will be explained using the flow chart in FIG.17.

First, in step S6000, the query input section 302 receives query input from the user and hands it over to the question analysis section 304.

Then in step S6100, the keyword extraction section 320 in the question analysis section 304 extracts keywords from the query entered.

Then in step S6200, the keyword type assignment section 322 in the question analysis section 304 decides the type of each keyword extracted in step S6100 and assigns a keyword type. Here, at least a semantic attribute with a level of detailedness as the keyword type is assigned.

Then in step S6300, the question type decision section 324 in the question analysis section 304 decides the search question type.

The processes in step S6100 (extraction of the keyword by the keyword extraction section 320) , step S6200 (assignment of the keyword type by the keyword type assignment section 322) and step S6300 (decision of the search question type by the question type decision section 324) can be executed using the same method as that in Embodiment 1 (see the respective operations of the keyword extraction section 104, keyword type assignment section 106 and question type decision section 108 in Embodiment 1). However, in this embodiment, suppose the type of query and its level of detailedness are decided through search question type decision.

Then in step S6400, the document retrieval section 308 searches for document collections stored in the document storage section 306 according to the keywords obtained in step S6100 and stores the retrieved documents in the retrieved document storage section 310. Though the search method by the document retrieval section 308 is not particularly limited, this embodiment will explain a document retrieval system that outputs retrieved results ranked according to the similarity to keywords as an example.

Then, in step S6500, the semantic attribute assignment section 326 in the answer generation section 312 assigns a semantic attribute with a level of detailedness to keywords in each retrieved document obtained in step S6400. As a system used here, the proper noun extraction technology, etc., described in Embodiment 3 can be used.

When semantic attributes are assigned to the retrieved document, this embodiment can also be adapted so as to allow tags with ambiguity as tags indicating semantic attributes. For example, an expression "Matsuyama" can be used as a personal name or company name depending on the context. When there is an expression indicating a personal name nearby such as "Manager Matsuyama" ("Manager" in this case) , a semantic attribute can be uniquely determined, but there are often cases where there is no such expression nearby and in such a case semantic attributes cannot be determined uniquely. Therefore, when semantic attributes cannot be uniquely determined, semantic attribute tags are attached while retaining ambiguity such as

<PERSON_OR_ORGANIZATION> Matsuyama
</PERSON_OR_ORGANIZATION>.

Furthermore, when semantic attributes are assigned to a retrieved document, it is also possible to add a value normalizing the expression in the document to the semantic attributes. In this case, the normalization system (see FIG. 14A to FIG.14C) described in Embodiment 3 can be used.

Then, in step S6600, the answer candidate selection section 328 in the answer generation section 312 selects answer candidates considering the type and level of detailedness of the query for the retrieved document with semantic attributes obtained in step S6500. For example, when the question type in step S6300 is a question about a place and the level of detailedness is decided to be level 1 (country level) , the expression in the retrieved document whose semantic attribute tag is <LOCATION DETAILEDNESS=COUNTRY> is decided to be an answer candidate. Likewise, when the question type is a question about a place and the level of detailedness is decided to be level 1 (country level), it is also possible to decide a semantic attribute whose level of detailedness is higher than this (e.g., municipality level) as an answer candidate.

Then, in step S6700, the answer ranking section 330 in the answer generation section 312 assigns weights to the respective answer candidates obtained in step S6600 and outputs ranking of answers sorted in descending order of weights.

Here, weight w (A) on the answer candidate A can be calculated by the following (Expression 1):

$$w(A)=\sum(1/(|p(A)\text{-}p(Ki)|))\text{+}d(A)\text{+}r(D) \qquad \text{(Expression 1)}$$

where p(A) denotes the position in the document at which the answer candidate A appears, p(Ki) denotes the position in the document at which keyword Ki appears. The first term of the above-described (Expression 1) is the sum total of reciprocals of absolute values of differences between the positions at which all keywords appear and the position at which the answer candidate A appears and this is such a term that an answer candidate that appears close to more keywords can get a greater weight. Furthermore, d(A) is a term obtained by a comparison between the level of detailedness of the answer candidate A and the level of detailedness of the query. For example, a definition is given so that when the level of detailedness of the answer candidate A completely matches the level of detailedness of the query, d(A)=10 and when the level of detailedness of the answer candidate A is higher than the level of detailedness of the query, d(A)=5 and when the level of detailedness of the answer candidate A is lower than the level of detailedness of the query, d(A)=1. Furthermore, r(D) is a term for factoring in the reciprocal of ranking in the document retrieved result including the answer candidate A. That is, when D is a document of ranking No. 1, r(D)=1, while it is ranking No. 10, r(D)=0.1. This allows the degree of similarity of the document including the answer candidate to the keyword to be reflected in the weight of the answer candidate. When a search system with no document ranking function is adopted as the document retrieval section 308, the third term in the above-described (Expression 1) is omissible.

The answer candidate weighting system is not limited to the system in the above-described (Expression 1), but can be implemented in various systems other than the above-described (Expression 1).

Then, in step S6800, the answer output section 314 outputs an answer based on the answer ranking obtained in step S6700. The output of the answer is obtained by, for example, extracting a predetermined number of cases (e. g., top 5 cases) in the system from the answer ranking and displaying them.

Thus, this embodiment assigns semantic attributes with a level of detailedness to keywords extracted from query, decides the type of the query, also assigns the semantic attribute with a level of detailedness to keywords in the retrieved document and selects answer candidates using this level of detailedness information, and can thereby set level of detailedness of answers according to the query appropriately, allow answer extraction considering the level of detailedness of answers intended by the user and obtain information (desired answer) requested by the user accurately. That is, it is possible to construct a question answering system considering the type and level of detailedness of the query entered.

In step S6500, if the system is constructed so that tags with ambiguity are attached, expressions with tags with ambiguity attached are also extracted as answer candidates in step S6600. For example, when a question type is a "question about an organization", an expression tagged as <PERSON_OR_ORGANIZATION>Matsuyama</PERSON_OR_ORGANIZ ATION> is also considered to be an answer candidate. In that case, this embodiment can also be adapted so as to take into consideration the fact that semantic attributes could not be uniquely determined in the answer candidate weight calculation in step S6700 (for example, by subtracting certain points).

Furthermore, in step S6500, when a value obtained by normalizing an expression in a document is added to a semantic attribute, the step S6600 may be adapted so as to output a normalized value instead of an expression in the document as an answer candidate. In this case, if, for example, there is an answer candidate <ORGANIZATION DETAILEDNESS=COMPANY VALUE= Matsuyama Electric Industries> Matsuyama</ORGANIZATION>, "Matsuyama Electric Industries" can be output instead of "Matsuyama."

Further, in step S6500, when a value obtained by normalizing an expression in a document is added to a semantic attribute, it is possible to regard an object described differently in the document as identical by examining the identity with the normalized value. For example, even if notations are different as: <ORGANIZATION DETAILEDNESS=COMPANY VALUE=Matsuyama Electric Industries>Matsuyama</ORGANIZATION> <ORGANIZATION DETAILEDNESS=COMPANY VALUE=Matsuyama Electric Industries>Matsuyama Electric</ORGANIZATION> <ORGANIZATION DETAILEDNESS=COMPANY VALUE=Matsuyama Electric Industries>Matsuyama Electric Industries Co., Ltd.</ORGANIZATION>,

these can be considered to be the same organization. Taking advantage of this, it is possible to select and output an appropriate notation from among different expressions indicating the same object according to the level of detailedness requested by the query.

Furthermore, this embodiment provides the semantic attribute assignment section 326 to assign semantic attributes to a retrieved document, but this embodiment is not limited to this and can also be adapted so as to assign semantic attributes to the entire document collection beforehand.

(Embodiment 5)

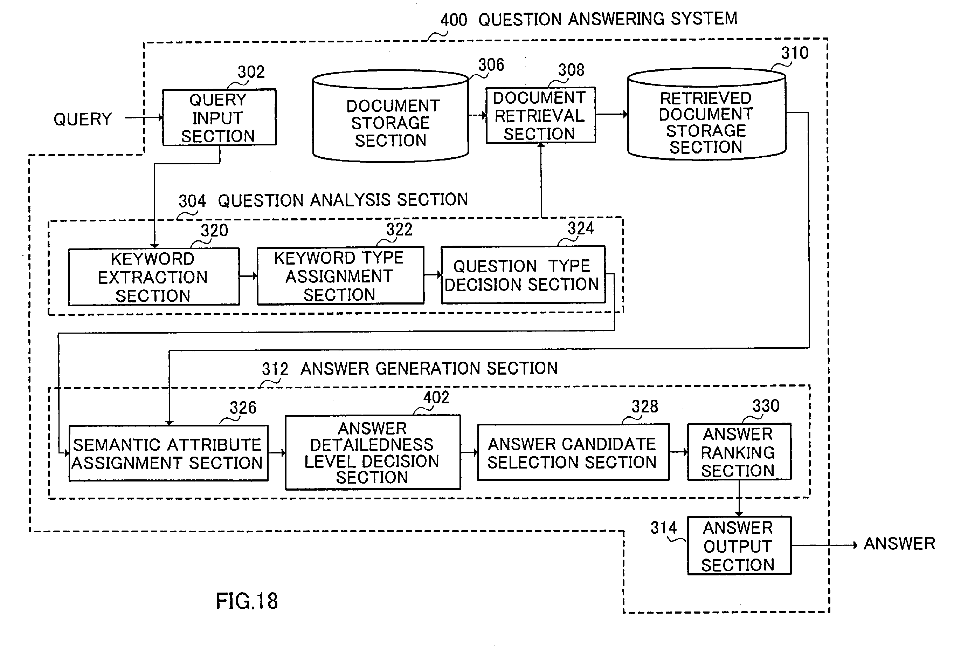

FIG. 18 is a block diagram showing a configuration of a question answering system according to Embodiment 5 of the present invention. This question answering system 400 has the same basic configuration as that of the question answering system 300 corresponding to Embodiment 4 shown in FIG.16, and the same components are assigned the same reference numerals and explanations thereof will be omitted.

A feature of this embodiment is that the answer generation section 312 further includes an answer detailedness level decision section 402. When the question type decision section 324 fails to clearly decide the level of detailedness requested by the query, the answer detailedness level decision section 402 has the function of estimating an appropriate level of detailedness as an answer.

The level of detailedness of an answer is estimated, for example, as follows. First, the semantic attribute assignment section 326 assigns semantic attributes including levels of detailednesss to retrieved documents and hands over the result to the answer detailedness level decision section 402. The answer detailedness level decision section 402 examines the received retrieved documents with the semantic attributes, examines at which level the level of detailedness of the semantic attribute that matches the search question type is described in the document including the keywords and estimates the level of detailedness at which especially disproportionately many keywords appear as the level of detailedness of the answer.

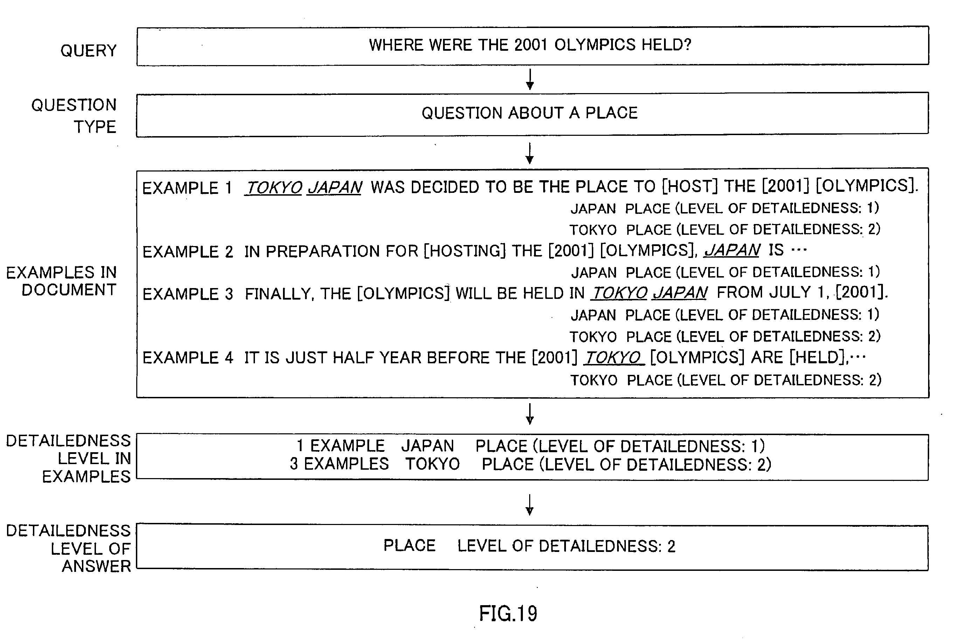

FIG.19 illustrates an overview of such an answer detailedness level estimation method. In the example of FIG. 19, in response to query "Where were the 2001 Olympics held?," the question type is decided to be a "question about a place," but the level of detailedness cannot be decided from the query. However, since one example of "Japan" (level of detailedness 1) and three example of "Tokyo" (level of detailedness 2) appear in the retrieved document (example) in this case, the level of detailedness of the answer to this query is estimated to be level 2 (prefectural and city governments level) at which a maximum number of the keywords appear.

In this embodiment, the answer detailedness level decision section 402 examines the level of detailedness of a semantic attribute of a retrieved document to estimate the level of detailedness of an answer, but this embodiment is not limited to this and can also be adapted so as to assign semantic attributes with a level of detailedness to the entire document collection, prepare external data obtained by calculating beforehand the frequency with which the level of detailedness of the answer appears with respect to the combinations of keywords and question types, refer to this external data when processing the question and answer and thereby decide the level of detailedness of the answer.

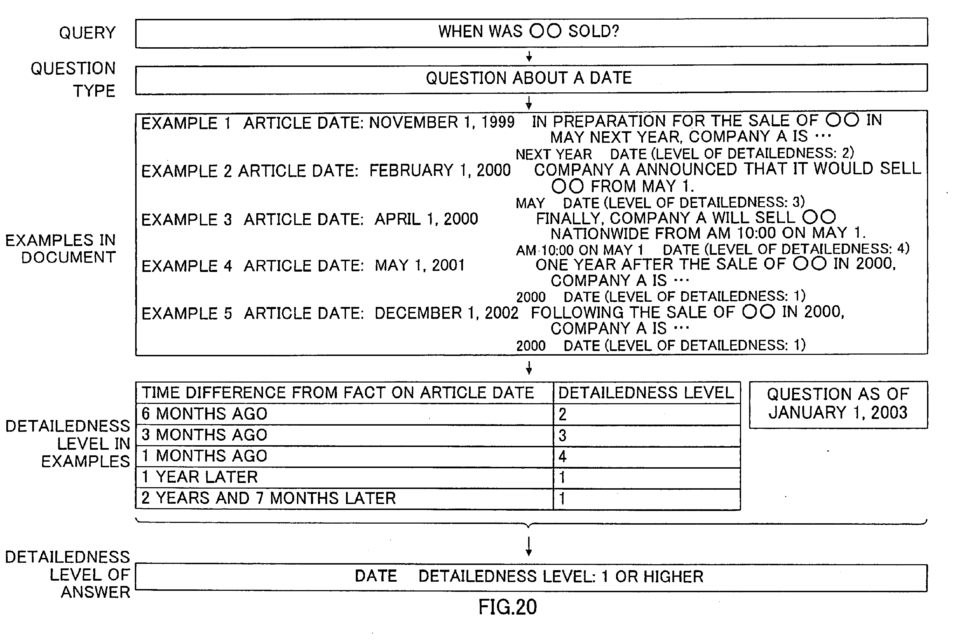

Then, with regard to an answer detailedness level decision method when there is no deviation in a detailedness level distribution of semantic attributes that match the search question type of a retrieved document will be explained using FIG.20.

In the example of FIG.20, in response to query "When was ◯◯ sold?" the question type is decided to be a "question about a date" but the level of detailedness cannot be decided from the query. Moreover, examples are uniformly distributed from level 1 to level 4 in the retrieved document. In this case, it is possible to roughly determine a correlation between a time difference and level of detailedness based on a difference between the date on which each document (example) of the retrieved result was created and the date on which the "sales" event actually took place and the level of detailedness of the expression in the document. For example, in the example of this FIG.20, from a correlation that when there is a difference of one year or more between the date on which the document was created and the date on which the event occurred, the level of detailedness in the example is level 1 (year level), assuming that the date on which the query was entered is, for example, January 2003, the level of detailedness of the answer to this query can be estimated to be level 1.

Thus, according to this embodiment, even when the level of detailedness of the answer cannot be decided from the query, it is possible to estimate an appropriate level of detailedness of the answer.

This embodiment can also be adapted so as to input the level of detailedness required by the user after presenting the level of detailedness of the answer estimated by the answer detailedness level decision section 402 as the "recommendable level of detailedness" to the user, and continue subsequent processes using the level of detailedness entered by the user as the level of detailedness of the answer.

(Embodiment 6)

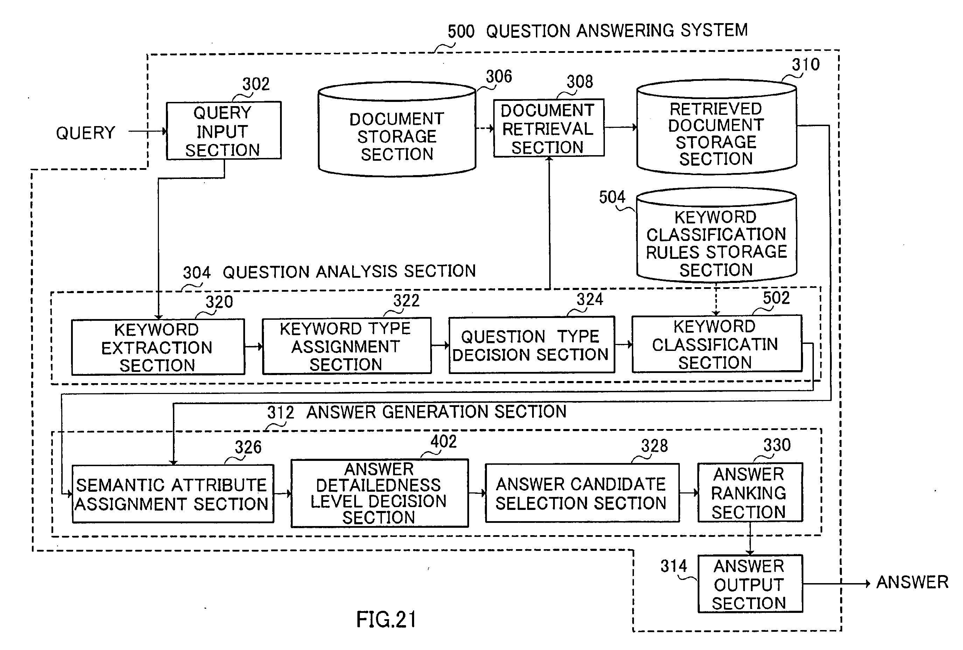

FIG.21 is a block diagram showing a configuration of a question answering system according to Embodiment 6 of the present invention. This question answering system 500 has the same basic configuration as that of the question answering system 400 corresponding to Embodiment 5 shown in FIG.18, and the same components are assigned the same reference numerals and explanations thereof will be omitted.

A feature of this embodiment is that a question analysis section 304 further includes a keyword classification section 502. The keyword classification section 502 has the function of classifying keywords into major and minor keywords with reference to keyword classification rules stored in a keyword classification rule storage section 504. That is, the configuration from a query input section 302, keyword extraction section 320, keyword type assignment section 322, question type decision section 324 and keyword classification section 502 up to document retrieval section 308 in FIG.21 is the same as the configuration of the document retrieval system 100 corresponding to Embodiment 1 shown in FIG. 1 and can perform the same search processing. Therefore, the question answering system 500 of this embodiment can output an answer to query with a higher level of accuracy by carrying out the search functions explained in Embodiment 1 to Embodiment 3 through its document search function.

When the question answering system 500 is implemented by a computer, the keyword classification rule storage section 504 may be a storage device inside the computer or a storage device outside the computer (e.g., one on a network).

As described above, the present invention can obtain information requested by the user with a high degree of accuracy.

The present invention is not limited to the above described embodiments, and various variations and modifications may be possible without departing from the scope of the present invention.

This application is based on the Japanese Patent Application No.2002-238031 filed on August 19, 2002 and the Japanese Patent Application No.2003-189111 filed on June 30, 2003, entire content of which is expressly incorporated by reference herein.

**Claims**

1. A document retrieval system that compares a degree of similarity between a query and a document collection and outputs a retrieved result ranked in order of similarity, comprising:

   an extraction section (104) that extracts a keyword from the query;
   a classification section (110) that classifies the keyword extracted by said extraction section (104) into a major type related to a central subject indicated by the query and a minor type related to supplementary information, based on attributes of said keyword; and
   a retrieval section (114,114a) that carries out document search processing to obtain the retrieved result ranked in order of similarity based on the classification result of said classification section (110).

2. The document retrieval system according to claim 1, wherein said attributes are semantic attributes.

3. The document retrieval system according to claim 1, wherein said attributes are syntactic attributes.

4. The document retrieval system according to claim 1, wherein said attributes are statistical attributes.

5. The document retrieval system according to claim 1, wherein said attributes are a combination of at least two types of attributes of semantic attributes, syntactic attributes and statistical attributes.

6. The document retrieval system according to claim 2, wherein meaning classification whereby factual expressions and interrogative expressions are classified according to meanings of said respective expressions is used for said semantic attributes.

7. The document retrieval system according to claim 6, wherein said meaning classification has hierarchic levels of detailedness.

8. The document retrieval system according to claim 3, using criteria as to whether said syntactic attributes are elements to be syntactical core elements or not.

9. The document retrieval system according to claim 1, further comprising a storage section (112) that stores rules for classifying keywords used by said classification section (110) into a major type and minor type, wherein said rules take the type of the query into consideration.

10. The document retrieval system according to claim 1, further comprising a storage section (112) that stores rules for classifying keywords used by said classification section (110) into a major type and minor type, wherein said rules do not take the type of the query into consideration.

11. The document retrieval system according to claim 1, wherein said retrieval section (114, 114a) carries out document search processing using keywords that belong to the major type as keywords essential to limit a set of documents to be retrieved, and keywords that belong to the major type and keywords that belong to the minor type as ranking keywords for comparing the degree of similarity between the query and document collection and sorting the retrieved documents of the retrieved result based on the degree of similarity.

12. The document retrieval system according to claim 1, wherein when comparing the degree of similarity between the query and document collection, said retrieval section (114,114a) classifies the documents of the retrieved result into layers based on the number of types of keywords belonging to the major type that have appeared and compares the degree of similarity in said respective layers obtained.

13. The document retrieval system according to claim 1, wherein when comparing the degree of similarity between the query and individual documents in the collection document collection, said retrieval section (114,114a) classifies the documents of the retrieved result into layers based on the number of major-type keywords in individual documents, then further classifies the documents in said respective layers obtained into layers based on the number of minor-type keywords in individual documents, and compares the degree of similarity in said respective layers obtained.

14. The document retrieval system according to claim 12, wherein when classifying the documents of the retrieved result into layers based on the number of types of keywords belonging to the major type that have appeared, said retrieval section (114,114a) classifies the documents into layers based on not only the number of types of said keywords that have appeared but also document restrictiveness of said keywords.

15. The document retrieval system according to claim 13, wherein in at least one of the case where the documents of the retrieved result are classified into layers based on the number of types of keywords belonging to the major type that have appeared and the case where the documents in said respective layers obtained are further classified into layers based on the number of types of keywords belonging to the minor type that have appeared, said retrieval section (114,114a) classifies the documents into layers based on not only the number of types of said keywords that have appeared but also document restrictiveness of said keywords.

16. The document retrieval system according to claim 1, wherein of the keywords extracted by said extraction section (104), keywords having specific semantic attributes are used as search conditions for bibliographic information of documents.

17. The document retrieval system according to claim 1, wherein when semantic attributes having hierarchic levels of detailedness are associated with their corresponding keywords, said retrieval section (114,114a) estimates, when comparing the degree of similarity between the query and document collection, the level of detailedness of the semantic attributes required of the keywords in the documents of the retrieved result based on the level of detailedness of the semantic attributes of the keywords in the query, evaluates the level of detailedness of the semantic attributes of the keywords in the documents of the retrieved result and thereby performs filtering of the documents of the retrieved result.

18. The document retrieval system according to claim 1, wherein when semantic attributes having hierarchic levels of detailedness are associated with their corresponding keywords, said retrieval section (114,114a) estimates, when comparing the degree of similarity between the query and document collection, the level of detailedness of the semantic attributes required of the keywords in the documents of the retrieved result based on the level of detailedness of the semantic attributes of the keywords in the query, evaluates the level of detailedness of the semantic attributes of the keywords in the documents of the retrieved result and thereby determines ranking of the documents of the retrieved result.

19. The document retrieval system according to claim 1, further comprising an assignment section (202) that assigns semantic attributes to the document collections, wherein said assignment section (202) assigns tags indicating semantic attributes to the document collections beforehand.

20. The document retrieval system according to claim 17 or 18, wherein expressions of keywords in the query and keywords in the document of the retrieved result are normalized beforehand.

21. The document retrieval system according to claim 19, wherein expressions of keywords in the query and keywords in the document of the retrieved result are normalized beforehand.

22. The document retrieval system according to claim 1, wherein said retrieval section (114,114a) carries out document search processing using portions of a document as a search unit.

23. A document searching method for comparing the degree of similarity between query and an individual documents in the collection and outputting a retrieved result ranked in order of similarity, comprising:

> an extraction step of extracting keywords from the query;
> a classification step of classifying the keywords extracted in said extraction step into a major type related to a central subject indicated by the query and a minor type related to supplementary information based on attributes of said keywords; and
> a searching step of carrying out document search processing to obtain retrieved results ranked in order of similarity based on the classification result in said classification step.

24. A document search program for comparing the degree of similarity between query and an individual documents in the collection and outputting a retrieved result ranked in order of similarity, causing a computer to execute:

> an extraction step of extracting keywords from the query;
> a classification step of classifying the keywords extracted in said extraction step into a major type related to a central subject indicated by the query and a minor type related to supplementary information based on attributes of said keywords; and
> a searching step of carrying out document search processing to obtain retrieved results ranked in order of similarity based on the classification result in said classification step.

25. A question answering system comprising:

> a question input section (302) that inputs query;
> a question analysis section (304) that analyzes the input query;
> a document retrieval section (308) that searches for a document collection based on the analysis result of the query;
> an answer generation section (312) that generates an answer to the query based on the document of the retrieved result; and
> an answer output section (314) that outputs the answer generated, wherein said question analysis section (304) comprising:

>> a keyword extraction section (320) that extracts keywords from the input query;
>> a keyword type assignment section (322) that assigns semantic attributes having hierarchic levels of detailedness to the extracted keywords as the keyword types; and
>> a question type decision section (324) that decides the type of the query based on the semantic attributes with a level of detailedness assigned to the extracted keywords,

> said answer generation section (312) comprising:

>> a semantic attribute assignment section (326) that assigns semantic attributes with a level of detailedness to the keywords in the document of the retrieved result;
>> an answer candidate selection section (328) that selects answer candidates from expressions of retrieved documents, keywords of which are assigned semantic attributes with a level of detailedness, based on the decision result of said question type decision section and the level of detailedness of said decision result; and

an answer ranking section (330) that ranks the selected answer candidates, and
said answer output section (314) outputs the answers based on the ranking result of said answer ranking section (330).

26. The question answering system according to claim 25, using meaning classification whereby factual expressions and interrogative expressions are classified according to meanings of said expressions as said semantic attributes.

27. The question answering system according to claim 25, wherein when semantic attributes or level of detailedness of keywords in a retrieved document cannot be uniquely decided, said semantic attribute assignment section (326) assigns semantic attributes with a level of detailedness while leaving a plurality of possibilities.

28. The question answering system according to claim 25, wherein when the level of detailedness requested by the query is not clear, said answer generation section (312) further comprises an answer detailedness level decision section (402) that decides an appropriate level of detailedness as an answer.

29. The question answering system according to claim 25, wherein when there are variations in the level of detailedness of keywords in the retrieved documents, said answer generation section (312) further comprises an answer detailedness level decision section (402) that decides an appropriate level of detailedness as an answer.

30. The question answering system according to claim 28 or 29, wherein said answer detailedness level decision section (402) presents the decision result as a recommended level together with other levels of detailedness to the user and decides the level of detailedness of the answer according to the selection by the user.

31. The question answering system according to claim 25, wherein when expressions of keywords in the query and keywords in the documents in the collection are normalized, said answer candidate selection section (328) approves keywords of expressions different from expressions of the keywords in the query as different expressions indicating the same object.

32. The question answering system according to claim 31, wherein when there are different expressions in the answer candidates, said answer output section (314) outputs normalized expressions as an answer.

33. The question answering system according to claim 31, wherein when an answer candidate character string has a different expression, said answer output section (314) selects an appropriate answer candidate character string from expressions approved as the different expressions based on the level of detailedness of the different expressions indicating the same object or normalized expressions.

34. The question answering system according to claim 25, wherein said document retrieval section (308) comprises the document retrieval system according to claim 1.

35. A question answering method comprising:

a question input section (302) that inputs query;
a question analysis section (304) that analyzes the input query;
a document retrieval section (308) that searches a document collection based on the analysis result of the query;
an answer generation section (312) that generates answers to the query based on the retrieved documents; and
an answer output section (314) that outputs the generated answers,

wherein said question input section (302) comprises a question inputting step of inputting query,
said question analysis section (304) comprises a keyword extracting step of extracting keywords from the query input in said question inputting step,
said question analysis section (304) comprises a keyword type assigning step of assigning semantic attributes having hierarchic levels of detailedness as keyword types to the keywords extracted in said keyword extracting step,
said question analysis section (304) comprises a question type deciding step based on semantic attributes having level of detailedness assigned to the keywords extracted in said keyword extracting step,
said document retrieval section (308) comprises a document searching step of searching a document collection based on the query analysis results in said keyword type assigning step and said question type deciding step,

said answer generation section (312) comprises a semantic attribute assigning step of assigning semantic attributes with a level of detailedness to keywords in the document of the retrieved result in said document searching step,

said answer generation section (312) comprises an answer candidate selecting step of selecting answer candidates from expressions of retrieved documents, keywords of which are assigned semantic attributes with a level of detailedness, in said semantic attribute assigning step based on the decision result in said question type deciding step and the level of detailedness of said decision result,

said answer generation section (312) comprises an answer ranking step of ranking the answer candidates selected in said answer candidate selecting step, and

said answer output section (314) comprises an answer outputting step of outputting answers based on the ranking result in said answer ranking step.

36. A question answering program in a question answering system comprising:

a question input section (302) that inputs query;
a question analysis section (304) that analyzes the input query;
a document retrieval section (308) that searches a document collection based on the analysis result of the query;
an answer generation section (312) that generates answers to the query based on the document of the retrieved result; and
an answer output section (314) that outputs the generated answers, said question answering program causing a computer to execute:

a question inputting step of inputting query;
a keyword extracting step of extracting keywords from the query input in said question inputting step;
a keyword type assigning step of assigning semantic attributes having hierarchic levels of detailedness as keyword types to the keywords extracted in said keyword extracting step;
a question type deciding step of deciding the type of the query based on semantic attributes having a level of detailedness assigned to the keywords extracted in said keyword extracting step;
a document searching step of searching a document collection based on the query analysis results in said keyword type assigning step and said question type deciding step;
a semantic attribute assigning step of assigning semantic attributes with a level of detailedness to keywords in the document of the retrieved result in said document searching step;
an answer candidate selecting step of selecting answer candidates from expressions of retrieved documents, keywords of which are assigned semantic attributes with a level of detailedness, in said semantic attribute assigning step based on the decision result in said question type deciding step and the level of detailedness of said decision result;
an answer ranking step of ranking the answer candidates selected in said answer candidate selecting step; and
an answer outputting step of outputting answers based on the ranking result in said answer ranking step.

EP 1 391 834 A2

100 DOCUMENT RETRIEVAL SYSTEM

FIG.1

EP 1 391 834 A2

QUERY | WHICH COUNTRY WAS THE CHAMPION OF FIFA WORLD CUP HELD IN 2002?

KEYWORDS

| 2002 | HELD | FIFA | WORLD CUP | CHAMPION | COUNTRY | WHICH |

KEYWORD TYPE ASSIGNMENT

| KEY-WORDS | 2002 | HELD | FIFA | WORLD CUP | CHAM-PION | COUNTRY | WHICH |
|---|---|---|---|---|---|---|---|
| SEMANTIC ATTRI-BUTES | DATE EXPRES-SION | VERB CONCEPT | ORGANIZA-TION NAME | EVENT NAME | VERB CONCEPT | GENERAL NOUN CONCEPT | QUESTION ABOUT A PLACE |
| DETAIL-EDNESS LEVEL | LEVEL 1 (YEAR LEVEL) | – | – | SPORT | – | – | LEVEL 1 (COUNTRY LEVEL) |
| SYNTAX ATTRI-BUTES | – | SUB VERB | – | – | MAIN VERB | – | INTERROGATIVE |

KEYWORD CLASSIFI-CATION

| 2002 | FIFA | WORLD CUP | CHAMPION |
MAJOR

| HELD | COUNTRY |
MINOR

QUESTION TYPE
↓
QUESTION ABOUT A PLACE

FIG.2

|  | DATE EXPRESSION | PLACE NAME EXPRESSION |
|---|---|---|
| LEVEL 0 | NO DETAILEDNESS LEVEL | NO DETAILEDNESS LEVEL |
| LEVEL 1 | YEAR LEVEL | COUNTRY LEVEL |
| LEVEL 2 | MONTH LEVEL | PREFECTURAL AND CITY GOVERNMENTS LEVEL |
| LEVEL 3 | DAY LEVEL | MUNICIPALITY LEVEL |
| LEVEL 4 | HOUR LEVEL | ADDRESS LEVEL |

FIG.3

EP 1 391 834 A2

| QUESTION TYPE | SEMANTIC ATTRIBUTE | DETAILEDNESS LEVEL | SYNTACTIC ATTRIBUTE | CLASSIFI-CATION |
|---|---|---|---|---|
| QUESTION ABOUT A PLACE | EVENT NAME | * | * | MAJOR |
| | DATE | YEAR LEVEL | * | MAJOR |
| | VERB CONCEPT | * | MAIN VERB | MAJOR |
| | VERB CONCEPT | * | SUB VERB | MINOR |
| | ORGANIZATION NAME | * | * | MAJOR |
| | GENERAL NOUN CONCEPT | * | * | MINOR |
| | ⋮ | | | ⋮ |
| QUESTION ABOUT A PERSON | PERSONAL NAME | * | * | MAJOR |
| | ORGANIZATION NAME | COMPANY | * | MAJOR |
| | ⋮ | | | ⋮ |
| QUESTION ABOUT A DATE | | | | |
| ⋮ | ⋮ | | | ⋮ |

FIG.4

EP 1 391 834 A2

EP 1 391 834 A2

```
          ┌──────────────┐
          │    START     │
          └──────┬───────┘
                 │
   ┌─────────────┼──────────────────────┐
   │  ┌────────────────────────────┐     │        KEYWORD:
   │  │ SELECT DOCUMENT INCLUDING  │ S1000│
   │  │ ALL KEYWORDS A, B AND C    │     │    MAJOR ( A, B, C )
   │  └────────────┬───────────────┘     │
   │               │                      │    MINOR  ( D, E )
   │  ┌────────────────────────────┐     │
   │  │ CALCULATE DEGREE OF        │     │
   │  │ SIMILARITY OF DOCUMENT     │ S1100│
   │  │ FROM FREQUENCY WITH WHICH  │     │
   │  │ ALL KEYWORDS A, B, C, D    │     │
   │  │ AND E APPEAR FOR SELECTED  │     │
   │  │ DOCUMENT                   │     │
   │  └────────────────────────────┘     │
   └─────────────┼──────────────────────┘
                 │
      ┌────────────────────────────┐
      │ SORT DOCUMENTS IN          │ S1200
      │ DESCENDING ORDER OF        │
      │ SIMILARITY                 │
      └────────────┬───────────────┘
                 │
          ┌──────────────┐
          │     END      │
          └──────────────┘
```

FIG.5

START

SELECT DOCUMENT INCLUDING ANY OF KEYWORDS A, B, C, D AND E — S2000

CALCULATE HOW MANY TYPES OF KEYWORDS A, B AND C HAVE APPEARED IN EACH SELECTED DOCUMENT AND CLASSIFY SEARCH RESULTS INTO LAYERS BY NUMBER OF TYPES THAT HAVE APPEARED — S2100

FURTHER CLASSIFY DOCUMENTS INTO LAYERS ACCORDING TO HOW MANY TYPES OF KEYWORDS D AND E HAVE APPEARED IN DOCUMENT IN EACH LAYER — S2200

CALCULATE DEGREE OF SIMILARITY OF EACH DOCUMENT FROM FREQUENCY WITH WHICH KEYWORDS A, B, C, D AND E — S2300

SORT DOCUMENTS IN DESCENDING ORDER OF DEGREE OF SIMILARITY FOR EACH LAYER — S2400

END

KEYWORD:

MAJOR  A, B, C

MINOR  D, E

HIGHER
RETRIEVED
RESULT
RANK

| DOCUMENT INCLUDING ALL A, B AND C | DOCUMENT INCLUDING BOTH D AND E |
| | DOCUMENT INCLUDING EITHER D OR E |
| | DOCUMENT INCLUDING NONE OF D AND E |
| DOCUMENT INCLUDING ANY OF A+B, B+C AND A+C | DOCUMENT INCLUDING BOTH D AND E |
| | DOCUMENT INCLUDING EITHER D OR E |
| | DOCUMENT INCLUDING NONE OF D AND E |
| DOCUMENT INCLUDING ANY ONE OF A, B AND C | DOCUMENT INCLUDING BOTH D AND E |
| | DOCUMENT INCLUDING EITHER D OR E |
| | DOCUMENT INCLUDING NONE OF D AND E |
| DOCUMENT INCLUDING NONE OF A, B AND C | DOCUMENT INCLUDING BOTH D AND E |
| | DOCUMENT INCLUDING EITHER D OR E |

RANK EACH LAYER ACCORDING TO FREQUENCY WITH WHICH A, B, C, D AND E HAVE APPEARED IN EACH LAYER

KEYWORD:

MAJOR ( A, B, C )     MINOR ( D, E )

FIG.7

EP 1 391 834 A2

START

SELECT DOCUMENT INCLUDING ANY OF KEYWORDS A, B, C, D AND E — S3000

WHEN DOCUMENTS SELECTED ARE CLASSIFIED INTO LAYERS ACCORDING TO THE NUMBER OF TYPES OF KEYWORDS A, B AND C THAT HAVE APPEARED, IF THE NUMBER OF TYPES THAT HAVE APPEARED IS THE SAME, DOCUMENTS ARE CLASSIFIED INTO LAYERS IN SUCH A WAY THAT COMBINATIONS WITH A GREATER SUM OF KEYWORD RESTRICTIVENESS ARE RANKED IN HIGHER LAYERS — S3100

THE CONTENT OF EACH LAYER IS FURTHER DIVIDED INTO LAYERS IN SUCH A WAY THAT DOCUMENTS IN THE RESPECTIVE LAYERS WITH A GREATER NUMBER OF TYPES OF KEYWORDS D AND E THAT HAVE APPEARED AND COMBINATIONS WITH A LARGER SUM OF KEYWORD RESTRICTIVENESS ARE RANKED IN HIGHER LAYERS — S3200

THE DEGREE OF SIMILARITY OF EACH DOCUMENT IS CALCULATED BASED ON THE FREQUENCY WITH WHICH KEYWORDS A, B, C, D AND E APPEAR — S3300

DOCUMENTS IN EACH LAYER ARE SORTED IN DESCENDING ORDER OF SIMILARITY — S3400

END

KEYWORD (WITH RESTRICTIVENESS):

MAJOR

A (RESTRICTIVE-NESS = 50)
B (RESTRICTIVE-NESS = 10)
C (RESTRICTIVE-NESS = 20)

MINOR

D (RESTRICTIVE-NESS = 30)
E (RESTRICTIVE-NESS = 10)

FIG.8

| | | |
|---|---|---|
| DOCUMENT INCLUDING ALL A, B AND C | DOCUMENT INCLUDING BOTH D AND E (RESTRICTIVENESS = 30+10) | |
| | DOCUMENT INCLUDING ONLY D (RESTRICTIVENESS = 30) | |
| | DOCUMENT INCLUDING ONLY E (RESTRICTIVENESS = 10) | |
| | DOCUMENT INCLUDING DOCUMENT INCLUDING NONE OF D AND E | |
| DOCUMENT INCLUDING ONLY A AND C (RESTRICTIVENESS = 50+20) | DOCUMENT INCLUDING BOTH D AND E | |
| | DOCUMENT INCLUDING ONLY D | |
| | DOCUMENT INCLUDING ONLY E | |
| | DOCUMENT INCLUDING NONE OF D AND E | |
| DOCUMENT INCLUDING ONLY A AND B (RESTRICTIVENESS = 50+10) | DOCUMENT INCLUDING BOTH D AND E | |
| | DOCUMENT INCLUDING ONLY D | |
| | DOCUMENT INCLUDING ONLY E | |
| | DOCUMENT INCLUDING NONE OF D AND E | |
| DOCUMENT INCLUDING ONLY B AND C (RESTRICTIVENESS= 20+10) | DOCUMENT INCLUDING BOTH D AND E | |
| | DOCUMENT INCLUDING ONLY D | |
| | DOCUMENT INCLUDING ONLY E | |
| | DOCUMENT INCLUDING NONE OF D AND E | |
| DOCUMENT INCLUDING ONLY A (RESTRICTIVENESS = 50) | DOCUMENT INCLUDING BOTH D AND E | |
| | DOCUMENT INCLUDING ONLY D | |
| | DOCUMENT INCLUDING ONLY E | |
| | DOCUMENT INCLUDING NONE OF D AND E | |
| DOCUMENT INCLUDING ONLY C (RESTRICTIVENESS = 20) | DOCUMENT INCLUDING BOTH D AND E | |
| | DOCUMENT INCLUDING ONLY D | |
| | DOCUMENT INCLUDING ONLY E | |
| | DOCUMENT INCLUDING NONE OF D AND E | |
| DOCUMENT INCLUDING ONLY B (RESTRICTIVENESS = 10) | DOCUMENT INCLUDING BOTH D AND E | |
| | DOCUMENT INCLUDING ONLY D | |
| | DOCUMENT INCLUDING ONLY E | |
| | DOCUMENT INCLUDING NONE OF D AND E | |
| DOCUMENT INCLUDING NONE OF A, B AND C | DOCUMENT INCLUDING BOTH D AND E | |
| | DOCUMENT INCLUDING ONLY D | |
| | DOCUMENT INCLUDING ONLY E | |

RANK A, B, C, D AND E IN EACH LAYER ACCORDING TO FREQUENCY WITH WHICH THEY HAVE APPEARED

KEYWORD (WITH RESTRICTIVENESS):

MAJOR: A (RESTRICTIVENESS =50) B (RESTRICTIVENESS =10) C (RESTRICTIVENESS =20)

MINOR: D (RESTRICTIVENESS =30) E (RESTRICTIVENESS =10)

FIG.9

QUERY | WHICH COUNTRY WAS THE CHAMPION OF FIFA WORLD CUP HELD IN 2002?

KEYWORDS: 2002 | HELD | FIFA | WORLD CUP | CHAMPION | COUNTRY | WHICH

KEYWORD TYPE ASSIGNMENT

| KEY-WORDS | 2002 | HELD | FIFA | WORLD CUP | CHAM-PION | COUNTRY | WHICH |
|---|---|---|---|---|---|---|---|
| SEMANTIC ATTRI-BUTES | DATE EXPRE-SSION | VERB CONCEPT | ORGANIZA-TION NAME | EVENT NAME | VERB CONCEPT | GENERAL NOUN CONCEPT | QUESTION ABOUT A PLACE |
| DETAIL-EDNESS LEVEL | LEVEL 1 (YEAR LEVEL) | – | – | SPORT | – | – | LEVEL 1 (COUNTRY LEVEL) |
| SYNTAX ATTRI-BUTES | – | SUB VERB | – | – | MAIN VERB | – | INTERROGATIVE |

KEYWORD CLASSIFI-CATION

2002 — SEARCH CONDITION FOR BIBLIOGRAPHIC INFORMATION

FIFA | WORLD CUP | CHAMPION — MAJOR

HELD | COUNTRY — MINOR

QUESTION TYPE ↓ QUESTION ABOUT A PLACE

FIG.10

EP 1 391 834 A2

| QUESTION TYPE | SEMANTIC ATTRIBUTE | DETAILEDNESS LEVEL | SYNTAX ATTRIBUTE | CLASSIFICATION |
|---|---|---|---|---|
| QUESTION ABOUT A PLACE | EVENT NAME | * | * | MAJOR |
| | DATE | YEAR LEVEL | * | SEARCH CONDITION FOR BIBLIOGRAPHIC INFORMATION |
| | VERB CONCEPT | * | MAIN VERB | MAJOR |
| | VERB CONCEPT | * | SUB VERB | MINOR |
| | ORGANIZATION NAME | * | * | MAJOR |
| | GENERAL NOUN CONCEPT | * | * | MINOR |
| | ⋮ | | | ⋮ |
| QUESTION ABOUT A PERSON | PERSONAL NAME | * | * | MAJOR |
| | ORGANIZATION NAME | COMPANY | * | MAJOR |
| | ⋮ | | | ⋮ |
| QUESTION ABOUT A DATE | | | | |
| ⋮ | ⋮ | | | ⋮ |

FIG.11

EP 1 391 834 A2

```
                    ┌─────────────┐
                    │    START    │
                    └──────┬──────┘
    ┌──────────────────────┼──────────────────────┐
    │         ┌────────────┴────────────┐          │          KEYWORD:
    │         │   ONLY DOCUMENTS THAT   │          │
    │         │   MATCH THE SEARCH      │          │
    │         │      CONDITION FOR      │  S4000   │──────    MAJOR    ⟨ A, B, C ⟩
    │         │ BIBLIOGRAPHIC INFORMATION          │
    │         │  F ARE CONSIDERED TO BE │          │          MINOR    ⟨  D, E  ⟩
    │         │     SEARCH TARGET       │          │
    │         └────────────┬────────────┘          │          SEARCH   ⟨   F    ⟩
    │         ┌────────────┴────────────┐          │          CONDITION
    │         │ DOCUMENTS INCLUDING ALL │          │          FOR
    │         │  KEYWORDS A, B AND C ARE│  S4100   │          BIBLIOGRAPHIC
    │         │        SELECTED         │          │          INFORMATION
    │         └────────────┬────────────┘          │
    │         ┌────────────┴────────────┐          │
    │         │ THE DEGREE OF SIMILARITY OF        │
    │         │   DOCUMENTS IS CALCULATED │        │
    │         │   BASED ON THE FREQUENCY  │        │
    │         │ WITH WHICH ALL KEYWORDS A,│ S4200  │
    │         │ B, C, D AND E HAVE APPEARED        │
    │         │ IN EACH SELECTED DOCUMENT │        │
    │         └────────────┬────────────┘          │
    └──────────────────────┼──────────────────────┘
              ┌────────────┴────────────┐
              │  DOCUMENTS ARE SORTED   │
              │   IN DESCENDING ORDER   │   S4300
              │      OF SIMILARITY      │
              └────────────┬────────────┘
                    ┌──────┴──────┐
                    │     END     │
                    └─────────────┘
```

FIG.12

200 DOCUMENT RETRIEVAL SYSTEM

FIG.13

EP 1 391 834 A2

FIG.14A    DOCUMENT COLLECTION

DOCUMENT DATE: 2002/6/30

THE FINAL MATCH OF THE 17<sup>TH</sup> FIFA WORLD CUP TOOK PLACE AT INTERNATIONAL STADIUM YOKOHAMA ON 30 AND BRAZIL BEAT GERMANY 2 TO 0 WINING THE TITLE FOR THE FIFTH TIME IN THE SECOND TOURNAMENT SINCE THE 1994 WORLD CUP IN THE USA.

FIG.14B    DOCUMENT COLLECTION WITH SEMANTIC ATTRIBUTES

DOCUMENT DATE: 2002/6/30

THE FINAL MATCH OF THE <FREQ>17<sup>TH</sup> </FREQ><ORGAIZATION>FIFA </ORGANIZATION><EVENT> WORLD CUP</EVENT> TOOK PLACE AT <LOCATION>INTERNATIONAL STADIUM YOKOHAMA</LOCATION> ON <DATE DETAILEDNESS=DAY> 30</DATE> AND <LOCATION DETAILEDNESS=COUNTRY>BRAZIL </LOCATION> BEAT <LOCATION DETAILEDNESS=COUNTRY>GERMANY </LOCATION> 2 TO 0 WINING THE TITLE FOR THE <FREQ>FIFTH TIME</FREQ> IN THE SECOND TOURNAMENT SINCE THE <DATE DETAILEDNESS=YEAR>1994</DATE> WORLD CUP IN THE <LOCATION DETAILEDNESS=COUNTRY> USA</LOCATION>.

FIG.14C    NORMALIZED DOCUMENT COLLECTION WITH SEMANTIC ATTRIBUTES

DOCUMENT DATE: 2002/6/30

THE FINAL MATCH OF THE <FREQ>17<sup>TH</sup> </FREQ><ORGANIZATION>FIFA </ORGANIZATION><EVENT> WORLD CUP</EVENT> TOOK PLACE AT <LOCATION>INTERNATIONAL STADIUM YOKOHAMA</LOCATION> ON <DATE DETAILEDNESS=DATE VALUE=20020630> 30</DATE> AND <LOCATION DETAILEDNESS=COUNTRY>BRAZIL </LOCATION> BEAT <LOCATION DETAILEDNESS=COUNTRY>GERMANY </LOCATION> 2 TO 0 WINING THE TITLE FOR THE <FREQ>FIFTH TIME</FREQ> IN THE SECOND TOURNAMENT SINCE THE <DATE DETAILEDNESS=YEAR VALUE=1994>1994</DATE> WORLD CUP IN THE <LOCATION DETAILEDNESS=COUNTRY>USA</LOCATION>.

START

SELECT DOCUMENTS
INCLUDING ALL KEYWORDS
A, B AND C
S5000

EXTRACT ONLY DOCUMENTS
WITH SEMANTIC ATTRIBUTES
ABOUT A PLACE ASSIGNED
FROM SELECTED DOCUMENTS
S5100

CALCULATE THE DEGREE OF
SIMILARITY OF DOCUMENTS
BASED ON THE FREQUENCY
WITH WHICH ALL KEYWORDS A,
B, C, D AND E APPEAR FOR
EACH SELECTED DOCUMENT
S5200

SORT DOCUMENTS IN
DESCENDING ORDER OF
SIMILARITY
S5300

END

KEYWORD:

MAJOR    A, B, C

MINOR    D, E

QUESTION TYPE:
"QUESTION ABOUT
A PLACE"

FIG.15

**QUERY** →

| 302 QUERY INPUT SECTION | 306 DOCUMENT STORAGE SECTION | 308 DOCUMENT RETRIEVAL SECTION | 310 RETRIEVED DOCUMENT STORAGE SECTION |

304 QUESTION ANALYSIS SECTION

| 320 KEYWORD EXTRACTION SECTION | 322 KEYWORD TYPE ASSIGNMENT SECTION | 324 QUESTION TYPE DECISION SECTION |

312 ANSWER GENERATION SECTION

| 326 SEMANTIC ATTRIBUTE ASSIGNMENT SECTION | 328 ANSWER CANDIDATE SELECTION SECTION | 330 ANSWER RANKING SECTION | 314 ANSWER OUTPUT SECTION |

→ **ANSWER**

EP 1 391 834 A2

FIG.16

```
                    ┌─────────────┐
                    │    START    │
                    └──────┬──────┘
            ┌──────────────┴──────────────┐
            │         INPUT QUERY          │    S6000
            └──────────────┬──────────────┘
            ┌──────────────┴──────────────┐
            │       EXTRACT KEYWORDS       │    S6100
            └──────────────┬──────────────┘
            ┌──────────────┴──────────────┐
            │     ASSIGN KEYWORD TYPE      │    S6200
            └──────────────┬──────────────┘
            ┌──────────────┴──────────────┐
            │    DECIDE TYPE OF QUESTION   │    S6300
            └──────────────┬──────────────┘
            ┌──────────────┴──────────────┐
            │      RETRIEVE DOCUMENT       │    S6400
            └──────────────┬──────────────┘
            ┌──────────────┴──────────────┐
            │  ASSIGN SEMANTIC ATTRIBUTES  │    S6500
            └──────────────┬──────────────┘
            ┌──────────────┴──────────────┐
            │   SELECT ANSWER CANDIDATES   │    S6600
            └──────────────┬──────────────┘
            ┌──────────────┴──────────────┐
            │       ANSWER RANKING         │    S6700
            └──────────────┬──────────────┘
            ┌──────────────┴──────────────┐
            │        OUTPUT ANSWER         │    S6800
            └──────────────┬──────────────┘
                    ┌──────┴──────┐
                    │     END     │
                    └─────────────┘
```

FIG.17

400 QUESTION ANSWERING SYSTEM

FIG.18

EP 1 391 834 A2

EP 1 391 834 A2

| QUERY | WHERE WERE THE 2001 OLYMPICS HELD? |

↓

| QUESTION TYPE | QUESTION ABOUT A PLACE |

↓

| EXAMPLES IN DOCUMENT | EXAMPLE 1  *TOKYO JAPAN* WAS DECIDED TO BE THE PLACE TO [HOST] THE [2001] [OLYMPICS].<br>JAPAN  PLACE (LEVEL OF DETAILEDNESS: 1)<br>TOKYO  PLACE (LEVEL OF DETAILEDNESS: 2)<br><br>EXAMPLE 2  IN PREPARATION FOR [HOSTING] THE [2001] [OLYMPICS], *JAPAN* IS ⋯<br>JAPAN  PLACE (LEVEL OF DETAILEDNESS: 1)<br><br>EXAMPLE 3  FINALLY, THE [OLYMPICS] WILL BE HELD IN *TOKYO JAPAN* FROM JULY 1, [2001].<br>JAPAN  PLACE (LEVEL OF DETAILEDNESS: 1)<br>TOKYO  PLACE (LEVEL OF DETAILEDNESS: 2)<br><br>EXAMPLE 4  IT IS JUST HALF YEAR BEFORE THE [2001] *TOKYO* [OLYMPICS] ARE [HELD],⋯<br>TOKYO  PLACE (LEVEL OF DETAILEDNESS: 2) |

↓

| DETAILEDNESS LEVEL IN EXAMPLES | 1 EXAMPLE   JAPAN    PLACE (LEVEL OF DETAILEDNESS: 1)<br>3 EXAMPLES  TOKYO    PLACE (LEVEL OF DETAILEDNESS: 2) |

↓

| DETAILEDNESS LEVEL OF ANSWER | PLACE    LEVEL OF DETAILEDNESS: 2 |

FIG.19

EP 1 391 834 A2

| QUERY | WHEN WAS ○○ SOLD? |
|---|---|

| QUESTION TYPE | QUESTION ABOUT A DATE |
|---|---|

EXAMPLES IN DOCUMENT

EXAMPLE 1  ARTICLE DATE: NOVEMBER 1, 1999   IN PREPARATION FOR THE SALE OF ○○ IN MAY NEXT YEAR, COMPANY A IS ···

NEXT YEAR    DATE (LEVEL OF DETAILEDNESS: 2)

EXAMPLE 2 ARTICLE DATE:  FEBRUARY 1, 2000   COMPANY A ANNOUNCED THAT IT WOULD SELL ○○ FROM MAY 1.

MAY    DATE (LEVEL OF DETAILEDNESS: 3)

EXAMPLE 3  ARTICLE DATE:  APRIL 1, 2000   FINALLY, COMPANY A WILL SELL ○○ NATIONWIDE FROM AM 10:00 ON MAY 1.

AM 10:00 ON MAY 1    DATE (LEVEL OF DETAILEDNESS: 4)

EXAMPLE 4  ARTICLE DATE:  MAY 1, 2001   ONE YEAR AFTER THE SALE OF ○○ IN 2000, COMPANY A IS ···

2000    DATE (LEVEL OF DETAILEDNESS: 1)

EXAMPLE 5  ARTICLE DATE:  DECEMBER 1, 2002  FOLLOWING THE SALE OF ○○ IN 2000, COMPANY A IS ···

2000    DATE (LEVEL OF DETAILEDNESS: 1)

DETAILEDNESS LEVEL IN EXAMPLES

| TIME DIFFERENCE FROM FACT ON ARTICLE DATE | DETAILEDNESS LEVEL |
|---|---|
| 6 MONTHS AGO | 2 |
| 3 MONTHS AGO | 3 |
| 1 MONTHS AGO | 4 |
| 1 YEAR LATER | 1 |
| 2 YEARS AND 7 MONTHS LATER | 1 |

| QUESTION AS OF JANUARY 1, 2003 |
|---|

| DETAILEDNESS LEVEL OF ANSWER | DATE    DETAILEDNESS LEVEL: 1 OR HIGHER |
|---|---|

FIG.20

FIG.21

EP 1 391 834 A2